# EUROPÄISCHE PATENTSCHRIFT

(11) **EP 4 149 269 B1**
(45) Veröffentlichungstag und Bekanntmachung des Hinweises auf die Patenterteilung: **29.04.2026**
(21) Anmeldenummer: 20726797.2
(22) Anmeldetag: 15.05.2020
(51) Int. Cl.: A22C 21/00

(54) **TRANSPORTVORRICHTUNG ZUM TRANSPORTIEREN VON ENTWEIDETEN GEFLÜGELKÖRPERN ODER TEILEN DAVON SOWIE VORRICHTUNG UND VERFAHREN ZUM AUFSATTELN UND VERARBEITEN DER GEFLÜGELKÖRPER ODER TEILEN DAVON**
TRANSPORT APPARATUS FOR TRANSPORTING EVISCERATED POULTRY BODIES OR PARTS THEREOF AS WELL AS APPARATUS AND METHOD FOR SADDLING AND PROCESSING OF THE POULTRY BODIES OR PARTS THEREOF
DISPOSITIF DE TRANSPORT POUR TRANSPORTER DES CARCASSES DE VOLAILLE ÉVISCÉRÉES OU DESPARTIES DE CELLES-CI, ET DISPOSITIF ET PROCÉDÉ POUR METTRE EN PLACE ET TRAITER LES CARCASSES DE VOLAILLE OU DES PARTIES DE CELLES-CI

(43) Veröffentlichungstag der Anmeldung: 22.03.2023
(73) Patentinhaber: Nordischer Maschinenbau Rud. Baader GmbH + Co. KG, 23560 Lübeck (DE)
(72) Erfinder: RIGGERT, Lasse, 23560 Lübeck (DE); LANDT, Andreas, 23560 Lübeck (DE)
(74) Vertreter: Stork Bamberger Patentanwälte PartmbB
(86) Internationale Anmeldenummer: PCT/EP2020/063731
(87) Internationale Veröffentlichungsnummer: WO 2021/228413

(56) Entgegenhaltungen:
- WO-A1-2019/001728
- WO-A1-2019/145203
- KR-A- 20180 038 292

## Beschreibung

WO2019001728 A1 offenbart eine Fördereinrichtung zum kontinuierlichen Fördern von Geflügelkörpern in Förderrichtung, ausgebildet und eingerichtet zum Ausrichten der Geflügelkörper in verschiedene Bearbeitungspositionen, umfassend einen mit Aufnahmeelementen zur Halterung der Geflügelkörper versehenen Endlosförderer, wobei der Endlosförderer in einer Förderebene umlaufend eingerichtet ist und eine Förder- strecke bildet, und wobei die Aufnahmeelemente jeweils ein zur Aufnahme eines der Geflügelkörper eingerichtetes und an einem Basiselement um eine senkrecht zu der Förderrichtung liegende Drehachse schwenkbar angeordnetes Sattelelement umfassen.

Die Erfindung betrifft eine Transporteinrichtung nach Anspruch 1, ausgebildet und eingerichtet zum Transportieren von entweideten Geflügelkörpern oder Teilen davon, insbesondere von Vorderhälften der Geflügelkörper, in Transportrichtung T entlang eines Transportpfads, umfassend ein Rahmengestell, eine am Rahmengestell gelagerte Transporteinheit mit einem umlaufend angetriebenen Transportmittel, und mindestens eine am Transportmittel befestigte Haltevorrichtung, die zum Aufsatteln und Halten des Geflügelkörpers oder des Teils davon während des Transports und während der Verarbeitung in einer Vorrichtung zur Verarbeitung von Geflügelkörpern oder Teilen davon ausgebildet und eingerichtet ist, wobei die Haltevorrichtung eine Klemmeinrichtung umfasst, die zum Fixieren des Geflügelkörpers oder des Teils davon einen Klemmhaken aufweist, der mittels eines Betätigungsmechanismus um eine Drehachse D_{K} aus einer Warteposition in eine Klemmposition und zurück schwenkbar ausgebildet ist, wobei der Betätigungsmechanismus einen Stellhebel umfasst, der um eine Drehachse D_{S} schwenkbar ausgebildet ist und mit einem Betätigungsorgan, das am Rahmengestell entlang des Transportpfads angeordnet ist, zum Schwenken des Stellhebels und damit zum Schwenken des Klemmhakens in Wirkverbindung bringbar ist.

Des Weiteren betrifft die Erfindung eine Vorrichtung nach Anspruch 13 zur Verarbeitung von entweideten Geflügelkörpern oder Teilen davon, insbesondere von Vorderhälften der Geflügelkörper, umfassend eine Transportvorrichtung zum Transportieren der Geflügelkörper oder Teilen davon entlang mindestens einer Bearbeitungsstation zum Bearbeiten der Geflügelkörper oder Teilen davon, sowie mindestens eine Bearbeitungsstation zum Bearbeiten der Geflügelkörper oder Teilen davon.

Die Erfindung ist weiterhin auf ein Verfahren nach Anspruch 14 zum Aufsatteln und Verarbeiten eines entweideten Geflügelkörpers oder eines Teils davon, insbesondere einer Vorderhälfte des Geflügelkörpers, gerichtet.

Solche Transportvorrichtungen, Vorrichtungen und Verfahren kommen in der geflügelverarbeitenden Industrie zum Einsatz. In der geflügelverarbeitenden Industrie werden entweidete Geflügelkörper oder Teile davon, insbesondere so genannte Vorderhälften ("Fronthalfs"), in entsprechenden Transportvorrichtungen gehalten und transportiert und in den Vorrichtungen verarbeitet. Für die Verarbeitung sind die Geflügelkörper oder Teile davon mittels des Transportmittels der Transporteinheit entlang des Transportpfads durch die Bearbeitungsstationen zu transportieren und mit Bezug auf die jeweiligen Verarbeitungsstationen der Vorrichtung zu positionieren. Üblicherweise sind mehrere Haltevorrichtungen an einem umlaufend angetriebenen Transportmittel der Transporteinheit befestigt, mittels dem die Geflügelkörper oder Teile davon einer oder mehreren Bearbeitungsstationen zugeführt bzw. in deren Wirkbereich gebracht werden. Dabei bildet das umlaufend angetriebene Transportmittel, das um Umlenk- und/oder Antriebselemente geführt ist, ein Obertrum und ein Untertrum. Obertrum und Untertrum können direkt übereinander in einer vertikalen Ebene liegen, so dass die Antriebs- und/oder Drehachsen D_{U} der Umlenkelemente im Wesentlichen horizontal ausgerichtet sind. Die Ebene kann aber auch geneigt sein, z.B. um 45° zur Vertikalen (Schrägstellung der Antriebs- und/oder Drehachsen D_{U} der Umlenkelemente), so dass Obertrum und Untertrum schräg versetzt übereinander liegen. Obertrum und Untertrum können auch in einer Ebene nebeneinander liegen, wobei die Drehachsen D_{U} der Umlenkelemente dann im Wesentlichen vertikal ausgerichtet sind. Entsprechend sind die Bearbeitungsstationen positioniert, an denen die Geflügelkörper oder Teile davon in einer vertikalen Ausrichtung zur Transportrichtung T oder in einer Ausrichtung parallel zur Transportrichtung T bearbeitet werden können.

Zur Verarbeitung werden die Geflügelkörper oder Teile davon automatisch oder manuell auf die Haltevorrichtung gebracht und manuell oder halbautomatisch ausgerichtet, zentriert und fixiert. Dieser Vorgang wird insgesamt auch als Aufsatteln oder Beschicken bezeichnet. Für eine qualitativ hochwertige und ausbeuteeffiziente Verarbeitung der Geflügelkörper oder Teilen davon ist ein sicheres und vor allem symmetrisches Aufsatteln der Geflügelkörper oder Teilen davon auf die Haltevorrichtung erforderlich. Das Aufsatteln umfasst zunächst das lose Aufsetzen der Geflügelkörper oder der Teile davon auf die Haltevorrichtung. Für ein vollständiges Aufsatteln ist der jeweilige Geflügelkörper oder das Teil davon auf der Haltevorrichtung auszurichten und zu zentrieren, mit Kraft auf die Haltevorrichtung zu drücken und dann zu fixieren, indem der Klemmhaken aus seiner Warteposition in seine Klemmposition gebracht wird.

Wie erwähnt, ist das symmetrische und sichere Aufsatteln von Geflügelkörpern oder Teilen davon, insbesondere von Vorderhälften, auf die Haltevorrichtung von besonderer Relevanz. Die zu verarbeitenden Geflügelkörper weisen am Beispiel einer Vorderhälfte eine Karkasse auf, die mindestens Teile eines Brustbeins umfasst. Eine Brustplatte ist Bestandteil des Brustbeins, das des Weiteren den so genannten Brustbeinkamm, auch als Keelbone bezeichnet, umfasst. Die Brustplatte und der Brustbeinkamm bilden demnach das Brustbein, das im Querschnitt T-förmig ausgebildet ist. Die Brustplatte bildet dabei den kurzen T-Strich, während der Brustbeinkamm den langen T-Strich darstellt. Bei der Verarbeitung von Vorderhälften, z.B. beim Freischneiden des Brustbeins, ist das sichere und symmetrische Aufsatteln der Vorderhälften auf die Haltevorrichtung von besonderer Bedeutung, damit die Vorderhälften den jeweiligen Bearbeitungsstationen optimiert ausgerichtet und zentriert zugeführt werden.

Das manuelle Aufsatteln ist aufgrund der hohen Arbeitstaktung einerseits und der aufzubringenden Kraft unter ergonomisch suboptimalen Bedingungen andererseits eine anstrengende und anspruchsvolle Tätigkeit, die seitens der Bedienperson zusätzlich umfangreiche Erfahrung erfordert, um die Geflügelkörper oder Teile davon zentriert und fest - üblicherweise während des Transports der Haltevorrichtung in Transportrichtung T - vollständig auf die Haltevorrichtung aufzusatteln. Entsprechend sind zumindest halbautomatische Aufsattelhilfen vorgesehen. Es sind Transportvorrichtungen der gattungsgemäßen Art bekannt, bei denen die Haltevorrichtungen fest und verdrehsicher gegenüber dem Transportmittel in einer Ausrichtung parallel zur Transportrichtung T angeordnet sind und mit dem Transportmittel im Obertrum und im Untertrum, das in derselben Ebene unterhalb des Obertrums verläuft, umlaufen. Die bekannten Haltevorrichtungen weisen einen Stellhebel auf, der um eine Drehachse D_{S} schwenkbar ist, die parallel zur Drehachse D_{K} des Klemmhebels ausgerichtet ist. Dadurch ragt der Stellhebel quasi nach unten in eine Transportebene, die von den sich in Transportrichtung T transportierten Haltevorrichtungen beschrieben wird, hinein. Mit anderen Worten ist der Stellhebel derart angeordnet und ausgerichtet, dass ein Schwenken desselben in einer Ebene erfolgt, die parallel zur vertikalen Mittelebene der Haltevorrichtung ausgerichtet ist bzw. in dieser liegt und senkrecht zur Transportebene steht.

Bei diesen Haltevorrichtungen erfolgt das Aufsatteln aufgrund ihrer starren, horizontalen Ausrichtung parallel zur Transportrichtung T in der horizontalen Ausrichtung der Haltevorrichtung. Dazu werden die Geflügelkörper oder die Teile davon manuell vor den in Transportrichtung T transportierten Haltevorrichtungen positioniert und auf die Haltevorrichtungen aufgesteckt. Durch den Weitertransport in Transportrichtung T erfolgt über die Haltevorrichtung selbst die Fixierung der Geflügelkörper oder der Teile davon, indem der Stellhebel beim Transport mit dem Betätigungsorgan am Rahmengestell in Wirkverbindung bzw. Eingriff kommt, mittels dem der Klemmhaken aus der Warteposition in die Klemmposition bewegt wird. Diese Ausführung weist zum einen den Nachteil auf, dass die Geflügelkörper ggf. in Abhängigkeit der Qualität des Beschickens nicht ausreichend zentriert sind, was zu Beeinträchtigungen beim Verarbeitungsergebnis führen kann. Zum anderen ist die manuelle Positionierung vor den horizontal und parallel zur Transportrichtung T ausgerichteten Haltevorrichtungen zeitaufwendig (zu Lasten einer höheren Taktgeschwindigkeit) und ergonomisch unzureichend bzw. bedienerunfreundlich. Zum bedienungsfreundlichen Aufsatteln ohne erhöhten Kraftaufwand ist es von der Handhabung einfacher, die Vorderhälften auf eine vertikal ausgerichtete Haltevorrichtung zu stecken. Eine Aufsattelung, also eine Beschickung der Haltevorrichtungen mit Geflügelkörpern oder den Teilen davon lässt sich in Transportvorrichtungen mit vertikal ausgerichteten Haltevorrichtungen der bekannten Art nicht realisieren. Eine Drehung der bekannten Haltevorrichtung in eine Position, in der die Haltevorrichtung vertikal zur Transportrichtung steht, lässt der Stellhebel nicht zu, da es bei einer Drehung zu einer Kollision mit anderen Komponenten der Transportvorrichtung kommen würde.

Der Erfindung liegt demnach die Aufgabe zugrunde, eine kompakte und in der Handhabung optimierte Transportvorrichtung zu schaffen, die eine einfache und präzise Aufsattelung der Geflügelkörper oder der Teile davon gewährleistet. Die Aufgabe besteht weiterhin darin, eine entsprechende Vorrichtung und ein entsprechendes Verfahren vorzuschlagen.

Diese Aufgabe wird durch eine Transportvorrichtung der eingangs genannten Art dadurch gelöst, dass die Haltevorrichtung um eine Achse A_{H}, die senkrecht zur Transportrichtung T verläuft, relativ zum Transportmittel drehbar ausgebildet und eingerichtet ist und dazu mit einem Betätigungshebel, der am Rahmengestell entlang des Transportpfads angeordnet ist, in Wirkverbindung bringbar ist, und dass die Drehachse D_{S} des Stellhebels senkrecht zur Drehachse D_{K} des Klemmhakens ausgerichtet ist, wobei der Betätigungshebel zum Drehen der Haltevorrichtung in Transportrichtung T vor dem Betätigungsorgan zum Betätigen des Stellhebels angeordnet ist, wobei die Haltevorrichtung einen Befestigungskörper und einen lösbar am Befestigungskörper befestigten Stützkörper umfasst, wobei der Befestigungskörper mittels einer Welle in einer am Transportmittel befestigten Lagerplatte drehbar um die Drehachse A_{H} gelagert ist und ein eine Ebene E_{D} aufspannendes Drehelement, vorzugsweise ein Drehkreuz, umfasst, das zum Drehen des Befestigungskörpers und damit der Haltevorrichtung um die Achse A_{H} mit dem Betätigungshebel in Wirkverbindung bringbar ist, wobei der eine Ebene E_{S} aufspannende Stellhebel einen Exzenterplattenabschnitt und einen Stellabschnitt umfasst und die Drehachse D_{S} des Stellhebels parallel und beabstandet zur Achse A_{H} verläuft, wobei der Stellhebel relativ zum Drehelement schwenkbar ist und die Ebene E_{S} und die Ebene E_{D} im Wesentlichen parallel zueinander verlaufen. Durch die drehbare Ausbildung der Haltevorrichtung um die Drehachse A_{H} besteht die Möglichkeit, die Haltevorrichtung mindestens zum Aufsatteln durch Eingriff des Betätigungshebels in eine vertikale Position zu bringen, in der die Bedienperson, ggf. auch eine automatisierte Handhabungshilfe, wie z.B. ein Roboter, die Geflügelkörper oder die Teile davon ohne Kraftaufwand schnell und zuverlässig auf die Haltevorrichtung aufstecken kann. Das einfache Aufstecken erfordert keine Kraft und insbesondere keine Erfahrung hinsichtlich der Zentrierung und kann zur Leistungserhöhung in enger Taktung und von beliebigen Bedienpersonen übernommen werden. Durch die erfindungsgemäße Ausbildung bzw. Ausrichtung der Drehachsen D_{S} (des Stellhebels) und D_{K} (des Klemmhakens) ist weiterhin eine einfache und präzise Betätigung des Stellhebels insbesondere auch in der vertikalen Ausrichtung der Haltevorrichtung gewährleistet. Das bedeutet, dass die Ebene, in der der Stellhebel liegt und geschwenkt werden kann, senkrecht zur vertikalen Mittelebene der Haltevorrichtung ausgerichtet ist und parallel zur Transportebene steht, die von den sich in Transportrichtung T transportierten Haltevorrichtungen beschrieben wird. Damit sind ein sicheres und kollisionsfreies Drehen der Haltevorrichtungen um die Drehachse A_{H} sowie ein einfaches und zuverlässiges Betätigen des Stellhebels durch das Betätigungsorgan sichergestellt.

. Die durch das Drehelement aufgespannte Ebene E_{D} verläuft einerseits parallel zu der von der Lagerplatte aufgespannten Ebene E_{L} und auch parallel zur jeweiligen Transportebene E_{T}. Der Betätigungshebel zum Auslösen der Drehbewegung der Haltevorrichtung kann ein aktiv gesteuerter Hebel sein. Bevorzugt handelt es sich jedoch um einen feststehenden Hebel, der in den Transportpfad hineinragt, derart, dass das Drehelement, am Beispiel eines Drehkreuzes, besonders bevorzugt ist ein so genannten Malteserkreuz, mit Ausnehmungen in den Hebel "einfädelt", so dass der Weitertransport der Haltevorrichtung in Transportrichtung T zu einer Drehung der Haltevorrichtung um etwa 90° führt, wodurch diese aus einer horizontal und parallel zur Transportrichtung T ausgerichteten Position in eine senkrecht zur Transportrichtung T ausgerichtete Position und zurück bewegbar ist.

. Der Stellhebel ist ein flächiger Hebel. Der Stellabschnitt, der quasi nasenförmig hervorsteht, ist beim bzw. durch den Transport der Haltevorrichtung in Transportrichtung T mit dem Betätigungshebel in Kontakt bringbar, so dass der Stellhebel geschwenkt bzw. um die Drehsachse D_{S} gedreht wird. Das Schwenken (Im Zusammenhang mit der Erfindung synonym auch als Drehen bezeichnet) des Stellhebels ist mittels des Betätigungsmechanismus, der mit dem Exzenterplattenabschnitt zusammenwirkt, auf den Klemmhaken zu übertragen. Die parallele Anordnung von Stellhebel und Drehelement mit parallel verlaufenden Ebenen E_{S} und E_{D} ermöglicht eine kompakte und sichere Bauweise der Haltevorrichtung zum Übertragen der Schwenkbewegung des Stellhebels auf den Klemmhaken. Andere Ausbildungen des Stellhebels sowie andere Kraft- und/oder Schwenkbewegungen übertragenden Mechanismen sind ebenfalls einsetzbar.

Vorteilhafterweise ist der Klemmhaken der Klemmeinrichtung schwenkbar an einer Haltestruktur gelagert, die ihrerseits mit dem Befestigungskörper verbunden ist, und der Stellhebel und der Klemmhaken sind über eine Stellstange miteinander verbunden, derart, dass die Stellstange mit einem Ende gelenkig und exzentrisch an dem Exzenterplattenabschnitt des Stellhebels und mit dem entgegengesetzten Ende gelenkig mit dem Klemmhaken verbunden ist, derart, dass der Stellhebel zum Bewegen des Klemmhakens aus einer Freigabestellung über einen Totpunkt hinweg in eine Schließstellung und zurück bewegbar ausgebildet und eingerichtet ist. Mit anderen Worten ist der Anlenkpunkt der Stellstange an dem Exzenterabschnitt des Stellhebels exzentrisch zur Drehachse D_{S} des Stellhebels ausgebildet. Dadurch ist eine Art klassischer Kniehebel gebildet. Die Haltestruktur kann z.B. durch zwei Tragarme gebildet sein, die lösbar am Befestigungskörper angeordnet sind. Eine Achse ist zwischen den beiden Tragarmen angeordnet und mit ihren entgegengesetzten Enden jeweils an einem Tragarm gelagert bzw. angeordnet. Auf der Achse ist der Klemmhaken drehbar gelagert angeordnet. Andere Ausführungen der Haltestruktur sind aber ebenfalls möglich. Ohne die Stellstange würde der Klemmhaken u.U. frei schwingen können. Durch die Anbindung an die Stellstange ist die Position des Klemmhakens jedoch abhängig von der Position des Stellhebels.

Besonders bevorzugt ist der Stellhebel federgespannt, wobei ein Federelement zwischen dem Befestigungskörper und dem Stellhebel gespannt ist, derart, dass der Stellhebel sowohl in der Freigabestellung als auch in der Schließstellung in der jeweiligen Stellung gehalten wird. Das Federelement kann z.B. zwischen einem feststehenden Element des Befestigungskörpers einerseits und einem stiftartigen Körper andererseits, der ebenfalls exzentrisch zur Drehachse D_{S} auf dem Exzenterabschnitt angeordnet ist, gespannt sein. Der Stift kann senkrecht zum Stellhebel bzw. zur vom Stellhebel aufgespannten Ebene E_{S} ausgerichtet sein. Vorzugsweise ist der Stift jedoch leicht geneigt zur senkrechten Ausrichtung, vorzugsweise um einen Winkel β ca. 10° bis 30°, ausgebildet. Die Befestigung des Federelementes am Befestigungskörper kann aber auch an einem bewegbaren Element angeordnet sein, beispielsweise an einem Kipphebel des Befestigungskörpers, der schwenkbar am Befestigungskörper angeordnet ist und gleichzeitig als Verschlusselement für den Stützkörper auf dem Befestigungskörper ausgebildet und eingerichtet ist. Dazu weist der Kipphebel entsprechende Rastnasen auf, die in Eingriff zu korrespondierenden Ausnehmungen am Stützkörper bringbar sind. Das Federelement kann direkt am Kipphebel angeordnet sein. In anderen Varianten kann das Federelement an einem Bolzen oder dergleichen angeordnet sein, der an dem Kipphebel vorzugsweise lösbar befestigt ist. Anstelle des Federelementes kann z.B. auch ein Pneumatikzylinder zum Einsatz kommen.

In einer besonders vorteilhaften Ausführungsform der erfindungsgemäßen Transportvorrichtung ist in Transportrichtung T hinter dem Betätigungshebel zum Drehen der Haltevorrichtung aus einer im Wesentlichen vertikal zur Transportrichtung T ausgerichteten Position in eine im Wesentlichen parallel zur Transportrichtung T ausgerichtete Position eine Aufsattelhilfsvorrichtung angeordnet, die das Betätigungsorgan zum Betätigen des Stellhebels umfasst. Mittels der Aufsattelhilfsvorrichtung besteht die Möglichkeit, den letztlich nur lose aufgesteckten Geflügelkörper automatisch, also ohne menschlichen Eingriff, zu zentrieren und fest auf die Haltevorrichtung zu schieben und dort zu fixieren, indem das Betätigungsorgan der Aufsattelhilfsvorrichtung mit dem Stellhebel in Wirkverbindung kommt. Einfach ausgedrückt liegt die Aufsattelhilfsvorrichtung im Transportpfad der Haltevorrichtung, derart, dass die Haltevorrichtung mit dem Geflügelkörper oder dem Teil davon beim Transport auf die Aufsattelhilfsvorrichtung trifft, wodurch durch den fortlaufenden Transport der Geflügelkörper oder der Teile davon auf der Haltevorrichtung zentriert wird, bevor das Betätigungsorgan über den Stellhebel den Klemmhaken aus der Warteposition in die Klemmposition bewegt. Durch das Zusammenwirken von Haltevorrichtung und Aufsattelhilfsvorrichtung sind die Zentrierung und die Verriegelung quasi zeitgleich auszuführen, so dass eine symmetrische Position des Geflügelkörpers oder des Teils davon auf der Haltevorrichtung für eine optimierte Verarbeitung sichergestellt ist. Dabei ist die Aufsattelhilfsvorrichtung bevorzugt mit Ausnahme des Betätigungsorgans passiv ausgebildet, wodurch ein besonders einfacher und kompakter Aufbau gewährleistet ist.

Besonders bevorzugt umfasst das Betätigungsorgan einen Schwenkhebel, der mittels eines Pneumatikzylinders aus einer Warteposition in eine Betätigungsposition und zurück bewegbar ist, derart, dass der Stellhebel des Betätigungsmechanismus aus einer Freigabestellung über einen Totpunkt hinweg in eine Schließstellung bringbar ist. Durch den Kniehebeleffekt verbleibt der Stellhebel vor oder hinter dem Totpunkt in seiner jeweiligen Position und ist letztlich nur über eine Krafteinwirkung in eine andere Position bewegbar. Anstelle des Pneumatikzylinders sind auch andere Stellelemente, wie z.B. ein Servomotor oder dergleichen einsetzbar.

Eine vorteilhafte Weiterbildung ist dadurch gekennzeichnet, dass die Aufsattelhilfsvorrichtung mindestens eine Prallplatte umfasst, die in einer Ausgangsstellung in den Transportpfad hineinragt und federnd gelagert ist, derart, dass die Prallplatte durch jede entlang des Transportpfads transportierte Haltevorrichtung mit dem Geflügelkörper oder Teil davon gegen eine Federkraft in eine Führungsstellung bewegbar ist. Diese Prallplatte, es können z.B. auch zwei Prallplatten vorgesehen sein, ist bezogen auf die Aufsattelhilfsvorrichtung eingangsseitig angeordnet, derart, dass der erste Kontakt des Geflügelkörpers oder des Teils davon mit der Prallplatte erfolgt. Die Prallplatte "empfängt" quasi den im Drehen befindlichen und noch nicht auf der Haltevorrichtung fixierten Geflügelkörper oder das Teil davon und sorgt dafür, dass unkontrollierte Bewegungen zwischen den Geflügelkörpern oder den Teilen davon und der Haltevorrichtung verhindert bzw. zumindest reduziert werden. Die Führungsstellung erstreckt sich über mehrere Positionen, da die Prallplatte, anliegend am Geflügelkörper oder dem Teil davon, nach und nach in eine im Wesentlichen horizontale Ausrichtung gedrückt wird.

Dazu ist die Prallplatte besonders bevorzugt in Transportrichtung T etwa in Höhe des Betätigungshebels zum Drehen der Haltevorrichtung angeordnet und ist in ihrer Ausgangsstellung mittels eines Federelementes gegen einen Anschlag gehalten. Anstelle des Federelementes sind auch andere Dämpfungsglieder, wie z.B. ein Pneumatikzylinder, einsetzbar.

Eine bevorzugte Ausführungsform ist dadurch gekennzeichnet, dass die Aufsattelhilfsvorrichtung eine Andrückeinrichtung umfasst, die zwei federnd gelagerte Druckplatten aufweist, die zum Führen und/oder Halten des Geflügelkörpers oder des Teils davon auf der Haltevorrichtung ausgebildet und eingerichtet sind. Diese Andrückeinrichtung, die in Transportrichtung T hinter der Prallplatte angeordnet ist, stellt sicher, dass der Geflügelkörper oder das Teil davon unmittelbar vor und während des Fixierens durch den Klemmhaken fest und flach auf die Haltevorrichtung gedrückt wird. Letztlich übt die Andrückeinrichtung Druck auf die Brustplatte aus, so dass diese möglichst eng und dicht am Stützkörper der Haltevorrichtung aufliegt, um ein sicheres Eindringen/Einstechen des Klemmhakens oberhalb der Brustplatte für eine präzise und sichere Fixierung zu gewährleisten.

In einer vorteilhaften Weiterbildung sind die beiden Druckplatten über ein Synchrongetriebe hinsichtlich einer Beweglichkeit aufeinander zu und voneinander weg synchronisiert, wobei die beiden Druckplatten durch ein Federelement jeweils gegen einen Anschlag in einer Warteposition gehalten sind. Die Druckplatten, die auch als Druckarme bezeichnet werden können, können unabhängig voneinander bewegbar ausgebildet sein. Dazu sind die Druckplatten jeweils einzeln und separat drehbar/schwenkbar am Befestigungskörper gelagert. Vorzugsweise sind die beiden Druckplatten jedoch z.B. über ineinandergreifende Zahnsegmente oder dergleichen miteinander synchronisiert. Das Federelement ist zwischen den beiden Druckplatten gespannt, derart, dass sie aufeinander zu gehalten sind und der in Transportrichtung T einlaufende Geflügelkörper oder das Teil davon die Druckplatten gegen die Federkraft auseinanderdrückt, wodurch eine Zentrier- und Haltekraft auf den Geflügelkörper oder das Teil davon wirkt, mittels der die Aufsattelung vervollständigt wird.

In einer bevorzugten Ausführungsform verlaufen die Druckplatten in Transportrichtung T in zwei Ebenen geneigt zueinander konvergierend. Dadurch wird in Transportrichtung T ein zunehmender Druck auf den Geflügelkörper oder das Teil davon ausgeübt, und zwar von zwei Seiten bzw. von beiden Seiten in jeweils zwei Richtungen. Einfach ausgedrückt sorgt die doppelte Schrägstellung der Druckplatten dafür, dass der Geflügelkörper oder das Teil davon von oben und von vorne gegen die Transportrichtung T auf die Haltevorrichtung gedrückt wird. In anderen Ausführungen können die Druckplatten auch parallel zueinander verlaufen und/oder linear ausgerichtet sein.

In einer weiteren besonders vorteilhaften Ausführungsform umfasst die Aufsattelhilfsvorrichtung eine Zentriereinrichtung zum Zentrieren des Geflügelkörpers oder Teils davon auf der Haltevorrichtung, die ein gabelförmiges Element aufweist, das gegen die Federkraft eines Federelementes ausweichbar an einem Tragrahmen der Aufsattelhilfsvorrichtung angeordnet ist. Die Zentriereinrichtung ist dazu ausgebildet und eingerichtet, ein Verdrehen des Geflügelkörpers oder des Teils davon nach dem Drehen in die horizontale Ausrichtung und in Transportrichtung T hinter der Prallplatte und bis zum endgültigen Fixieren durch den Klemmhaken zu verhindern bzw. zumindest zu beschränken.

Zweckmäßigerweise weist das gabelförmige Element zwei beabstandet zueinander angeordnete Streben auf, die zum Zentrieren eines Brustbeinkamms des zu transportierenden Geflügelkörpers oder Teils davon ausgebildet und eingerichtet sind. Durch diese Rundführungen zu beiden Seiten der vertikalen Mittelebene der Haltevorrichtung kann der Geflügelkörper oder das Teil davon zentriert und geführt in den Bereich geleitet werden, in dem der Klemmhaken ausgelöst wird. Die in Transportrichtung T zunehmend federnde Belastung hält den Geflügelkörper oder das Teil davon sicher in Position. Anstelle des Federelementes können auch andere Dämpfungselemente eingesetzt werden.

Die Aufgabe wird auch durch eine Vorrichtung zur Verarbeitung von entweideten Geflügelkörpern oder Teilen davon, insbesondere von Vorderhälften der Geflügelkörper, mit den eingangs genannten Merkmalen dadurch gelöst, dass die Transportvorrichtung zum Transportieren der Geflügelkörper oder Teilen davon nach einem oder mehreren der Ansprüche 1 bis 12 ausgebildet und eingerichtet ist.

Die sich daraus ergebenden Vorteile wurden bereits im Zusammenhang mit der Transportvorrichtung beschrieben, weshalb zur Vermeidung von Wiederholungen auf die entsprechenden Passagen verwiesen wird.

Die Aufgabe wird weiterhin durch das eingangs genannte Verfahren gelöst, das folgende Schritte umfasst: Aufsetzen des Geflügelkörpers von oben nach unten auf eine im Wesentlichen vertikal ausgerichtete Haltevorrichtung einer Transportvorrichtung nach Anspruch 4, Drehen der Haltevorrichtung und damit des noch freien Geflügelkörpers oder Teils davon aus der im Wesentlichen vertikal zur Transportrichtung T ausgerichteten Position in eine im Wesentlichen parallel zur Transportrichtung T ausgerichtete Position während des Transports des Geflügelkörpers oder Teils davon in Transportrichtung T entlang des Transportpfads, Fixieren des Geflügelkörpers oder des Teils davon auf der Haltevorrichtung durch Auslösen einer Schwenkbewegung eines Klemmhakens aus einer Warteposition in eine Klemmposition während des Transports in Transportrichtung T, und Verarbeiten des Geflügelkörpers oder Teils davon während des Transports desselben an mindestens einer entlang des Transportpfads angeordneten Bearbeitungsstation, wobei der Geflügelkörper oder das Teil davon vor dem Fixieren und während des Fixierens durch den Klemmhaken mittels einer Zentriereinrichtung der Aufsattelvorrichtung im Bereich eines Brustbeinkamms des Geflügelkörpers oder des Teils davon mittig zur Haltevorrichtung zentriert wird. Der Aufsattelvorgang, also das vollständige Aufsatteln, wird quasi in zwei Schritte unterteilt, nämlich in einen ersten Schritt, der einfach und ohne Erfahrung ausgeführt werden kann, manuell oder automatisch, bei dem die Haltevorrichtung vertikal ausgerichtet ist, und in einen zweiten Schritt, der automatisch bzw. automatisiert ausgeführt wird, bei dem der Geflügelkörper oder das Teil davon zentriert und fixiert wird, wobei die Haltevorrichtung parallel zur Transportrichtung, nämlich horizontal ausgerichtet ist. Das Zentrieren erfolgt durch das Aufnehmen des Brustbeinkamms in die Zentriereinrichtung, so dass eine symmetrische Aufsattelung sichergestellt ist.

Vorteilhafterweise wird der Geflügelkörper oder das Teil davon während des Drehens der Haltevorrichtung und damit des Geflügelkörpers oder Teils davon aus der vertikalen in die horizontale Ausrichtung mittels mindestens einer Prallplatte der Aufsattelhilfsvorrichtung gehalten und geführt. Die Prallplatte "begleitet" den unbefestigten/unfixierten Geflügelkörper oder das Teil davon beim Drehen in die horizontale Ausrichtung und hält damit den Geflügelkörper oder das Teil davon auf der Haltevorrichtung.

Das Verfahren ist weiterhin vorteilhaft dadurch gekennzeichnet, dass der Geflügelkörper oder das Teil davon vor dem Fixieren und während des Fixierens durch den Klemmhaken mittels einer Andrückeinrichtung der Aufsattelhilfsvorrichtung fest und flach auf die Haltevorrichtung gedrückt wird.

Die sich aus den vorstehend aufgeführten Verfahrensschritten ergebenden Vorteile wurden bereits im Zusammenhang mit der Transportvorrichtung beschrieben, weshalb zur Vermeidung von Wiederholungen auf die entsprechenden Passagen verwiesen wird.

Weitere zweckmäßige und/oder vorteilhafte Merkmale und Weiterbildungen der Transortvorrichtung, der Vorrichtung zur Verarbeitung von entweideten Geflügelkörpern oder Teilen davon sowie dem Verfahren ergeben sich aus den Unteransprüchen und der Beschreibung. Besonders bevorzugte Ausführungsformen der Erfindung werden anhand der beigefügten Zeichnung näher erläutert. In der Zeichnung zeigt:
- Fig. 1: eine schematische Darstellung eines Ausschnitts einer erfindungsgemäßen Transportvorrichtung in Vorderansicht,
- Fig. 2: die Darstellung gemäß Figur 1 in perspektivischer Rückansicht,
- Fig. 3: die Darstellung gemäß Figur 1 in Seitenansicht,

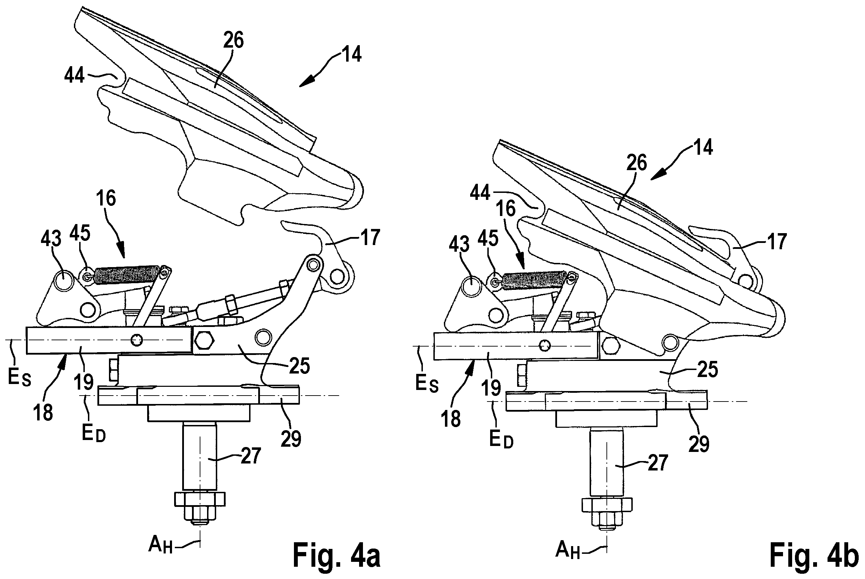

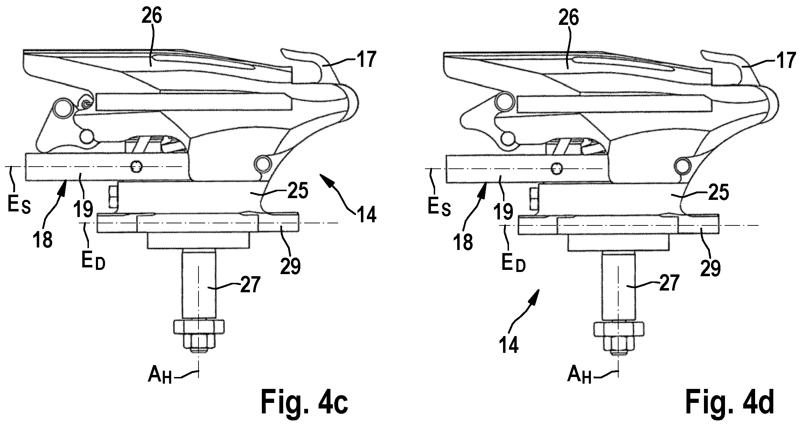

- Fig. 4 a bis d: eine schematische Darstellung einer aus Befestigungskörper und Stützkörper gebildeten Haltevorrichtung in verschiedenen Montagezuständen,
- Fig. 5: eine schematische Darstellung des Befestigungskörpers in Draufsicht mit dem Klemmhaken in Warteposition,
- Fig. 6: die Darstellung gemäß Figur 5 in perspektivischer Ansicht,
- Fig. 7: eine schematische Darstellung des Befestigungskörpers in Draufsicht mit dem Klemmhaken in Klemmposition,
- Fig. 8: die Darstellung gemäß Figur 7 in perspektivischer Ansicht,
- Fig. 9: eine schematische Darstellung einer Aufsattelhilfsvorrichtung in Vorderansicht, und
- Fig. 10: die Darstellung gemäß Figur 9 in Rückansicht.

Die in der Zeichnung dargestellte Transportvorrichtung ist zum Transportieren und Fixieren von mindestens Teile eines Brustbeins umfassenden Vorderhälften von Geflügelkörpern ausgebildet und eingerichtet. Die Erfindung ist in gleicher Weise auch zum Transportieren und Fixieren anderer Teile des Geflügelkörpers ausgebildet und eingerichtet und entsprechend einsetzbar.

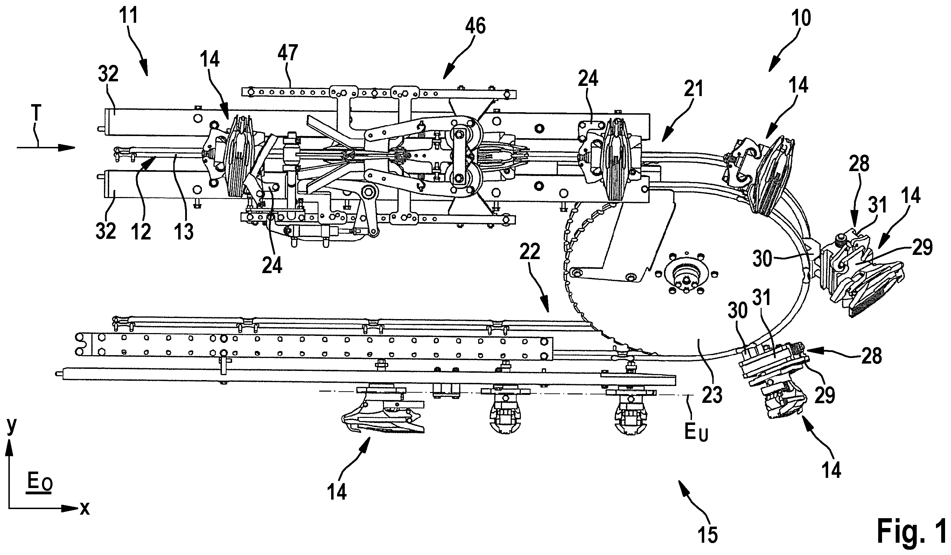

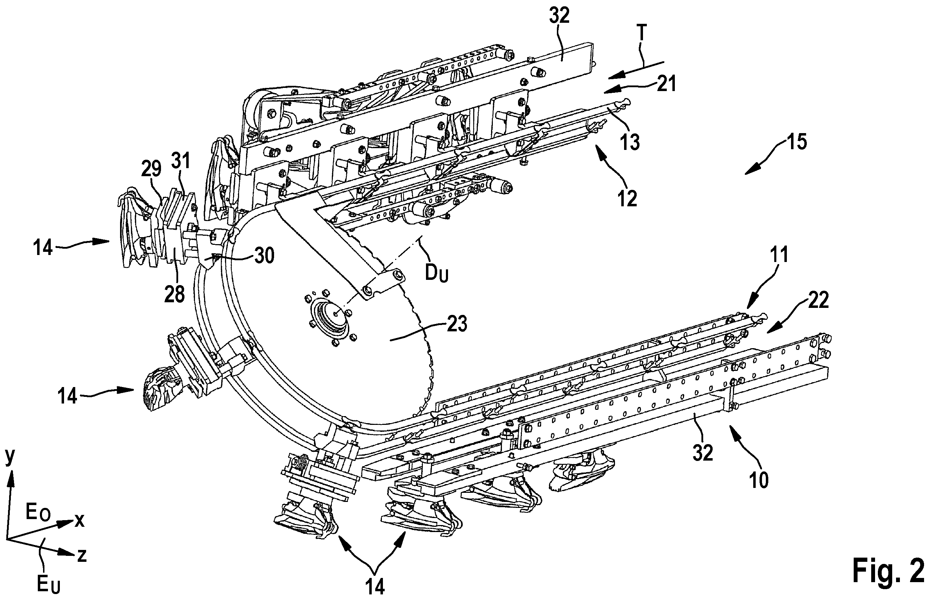

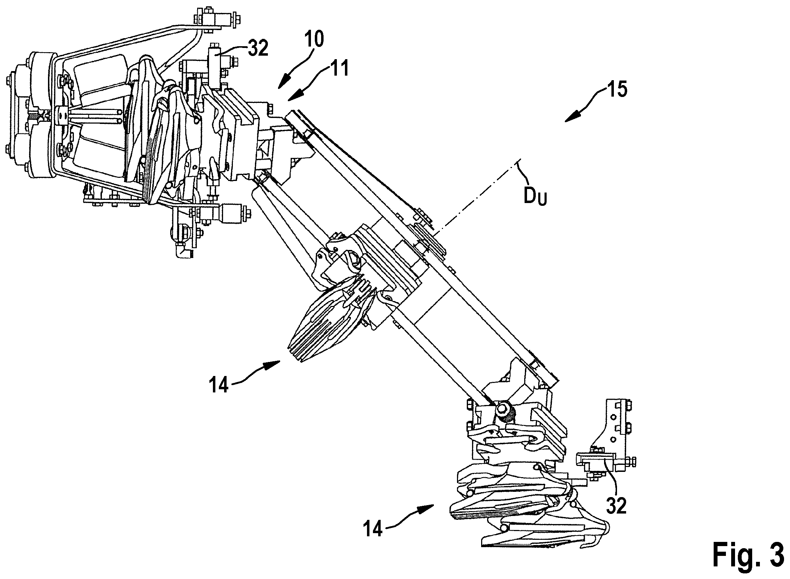

Die in den Figuren 1 bis 3 dargestellte Transportvorrichtung 10 ist zum Transportieren von entweideten Geflügelkörpern oder Teilen davon, insbesondere von Vorderhälften der Geflügelkörper, in Transportrichtung T entlang eines Transportpfads ausgebildet und eingerichtet und umfasst ein Rahmengestell 11, eine am Rahmengestell 11 gelagerte Transporteinheit 12 mit einem umlaufend angetriebenen Transportmittel 13, und mindestens eine am Transportmittel 13 befestigte Haltevorrichtung 14, die zum Aufsatteln und Halten des Geflügelkörpers oder des Teils davon während des Transports und während der Verarbeitung in einer Vorrichtung 15 zur Verarbeitung von Geflügelkörpern oder Teilen davon ausgebildet und eingerichtet ist, wobei die Haltevorrichtung 14 eine Klemmeinrichtung 16 umfasst, die zum Fixieren des Geflügelkörpers oder des Teils davon einen Klemmhaken 17 aufweist, der mittels eines Betätigungsmechanismus 18 um eine Drehachse D_{K} aus einer Warteposition in eine Klemmposition und zurück schwenkbar ausgebildet ist, wobei der Betätigungsmechanismus 18 einen Stellhebel 19 umfasst, der um eine Drehachse D_{S} schwenkbar ausgebildet ist und mit einem Betätigungsorgan 20, das am Rahmengestell 11 entlang des Transportpfads angeordnet ist, zum Schwenken des Stellhebels 19 und damit zum Schwenken des Klemmhakens 17 in Wirkverbindung bringbar ist.

Die Anzahl der Haltevorrichtungen 14 ist variabel. Beispielhaft sind mehrere Haltevorrichtungen 14 dargestellt, die vorzugsweise gleichmäßig beabstandet an dem Transportmittel 13 vorzugsweise lösbar befestigt sind. Das Transportmittel 13 bildet einen Obertrum 21 und einen Untertrum 22 und ist um Umlenkelemente 23 geführt, die zum Umlenken und/oder Antreiben des Transportmittels 13 ausgebildet und eingerichtet sind und um Drehachsen D_{U} drehbar sind. Die Drehachsen D_{U} können vertikal oder horizontal oder geneigt ausgerichtet sein. In der beispielhaften Darstellung sind die Drehachsen D_{U} um etwa 45° geneigt zur vertikalen Ausrichtung geneigt.

Diese Transporteinrichtung 10 zeichnet sich erfindungsgemäß dadurch aus, dass die Haltevorrichtung 14 mindestens zum vollständigen Aufsatteln des Geflügelkörpers oder Teils davon um eine Achse A_{H}, die senkrecht zur Transportrichtung T verläuft, relativ zum Transportmittel 13 drehbar ausgebildet und eingerichtet ist und dazu mit einem Betätigungshebel 24, der am Rahmengestell 11 entlang des Transportpfads angeordnet ist, in Wirkverbindung bringbar ist, und dass die Drehachse D_{S} des Stellhebels 19 senkrecht zur Drehachse D_{K} des Klemmhakens 17 ausgerichtet ist, wobei der Betätigungshebel 24 zum Drehen der Haltevorrichtung 14 in Transportrichtung T vor dem Betätigungsorgan 20 zum Betätigen des Stellhebels 19 angeordnet ist.

Erfindungsgemäß ist jede Haltevorrichtung 14 zweiteilig ausgebildet und umfasst einen Befestigungskörper 25 und einen lösbar am Befestigungskörper 25 befestigten Stützkörper 26, wobei der Befestigungskörper 25 mittels einer Welle 27 in einer am Transportmittel 13 befestigten Lagerplatte 28 drehbar um die Drehachse A_{H} gelagert ist und ein eine Ebene E_{D} aufspannendes Drehelement 29, vorzugsweise ein Drehkreuz, umfasst, das zum Drehen des Befestigungskörpers 25 und damit der Haltevorrichtung 14 um die Achse A_{H} mit dem Betätigungshebel 24 in Wirkverbindung bringbar ist. Die Lagerplatten 28 können direkt am Transportmittel 13 angeordnet sein. Vorzugsweise erfolgt die Befestigung der Lagerplatten 28 über ein Verbindungselement 30. Das Transportmittel 13 selbst ist z.B. als Förderkette ausgebildet, an der die Lagerplatten 28 befestigt sind. Die Lagerplatten 28 weisen mindestens eine Führungsnut 31 auf. Zu dieser Führungsnut 31 sind am Rahmengestell 11 korrespondierende/passende Führungsplatten 32 angeordnet, die sich mindestens abschnittsweise entlang des Obertrums 21 und/oder Untertrums 22 erstrecken.

Am Beispiel der Figuren 1 bis 3 ist zu erkennen, dass unterschiedliche Transportebenen definiert sind. Im Obertrum 21 weisen die Haltevorrichtungen 14 nach außen, während sie im Untertrum 22 nach unten weisen. Durch das Drehen der Haltevorrichtungen 14 einerseits und die Schrägstellung der Drehachsen D_{U} der Umlenkelement 23 ergeben sich beim Transport in Transportrichtung T unterschiedliche Transportebenen. Im Obertrum 21 ist eine vertikal gerichtete Transportebene E_{O} definiert, während im Untertrum 22 eine horizontal gerichtete Transportebene E_{U} definiert ist. Die Anordnung von Obertrum 21 zu Untertrum 22 zueinander sowie deren jeweilige Ausrichtung ist jedoch variabel.

Die Drehung der Haltevorrichtung 14 um vorzugsweise jeweils 90°, z.B. durch den Einsatz eines so genannten Malteserkreuzes als Drehelement 29, dient dazu, die Haltevorrichtung 14 zumindest im Bereich einer Aufsattelposition, also einer Position, in der der Geflügelkörper oder das Teil davon auf die Haltevorrichtung 14 aufgesteckt wird, in einer vertikal zur Transportrichtung T ausgerichteten Position zu halten, um den Geflügelkörper oder das Teil davon von oben nach unten auf die Haltevorrichtung 14 zu stecken. Für das endgültige und vollständige Aufsatteln, also das Zentrieren und Fixieren des Geflügelkörpers oder des Teils davon auf der Haltevorrichtung 14, ist eine horizontale, parallel zur Transportrichtung T ausgerichtete Position bevorzugt. Dazu ist das Malteserkreuz jeweils in Eingriff mit einem vorzugsweise feststehenden und ortsfesten - entsprechend als passiv zu bezeichnenden - Betätigungshebel 24 in Eingriff bringbar. Es sind jedoch auch bewegbare und aktive Betätigungselemente einsetzbar. Zum Fixieren selbst ist der Stellhebel 19 mittels des Betätigungsorgans 20 bewegbar, derart, dass der Klemmhaken 17 aus seiner Warteposition in seine Klemmposition bewegbar ist.

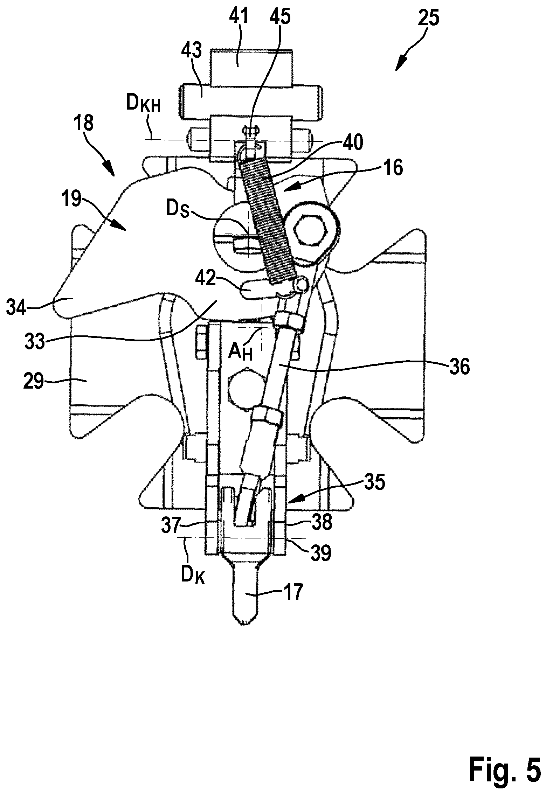

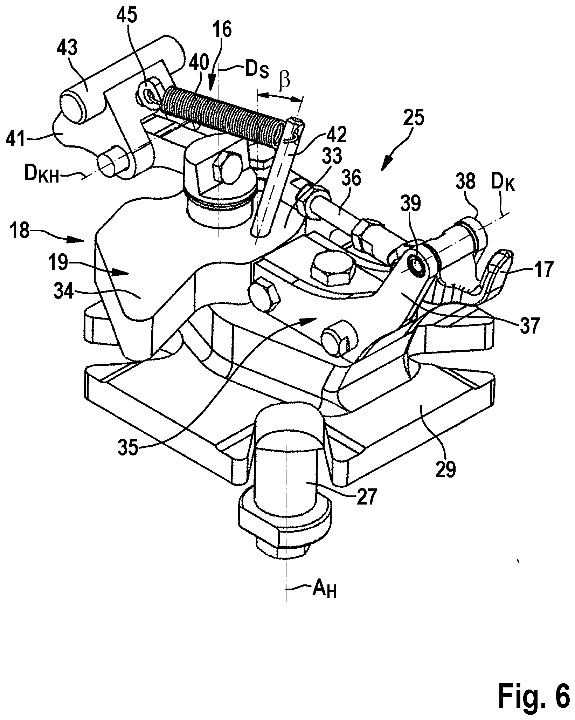

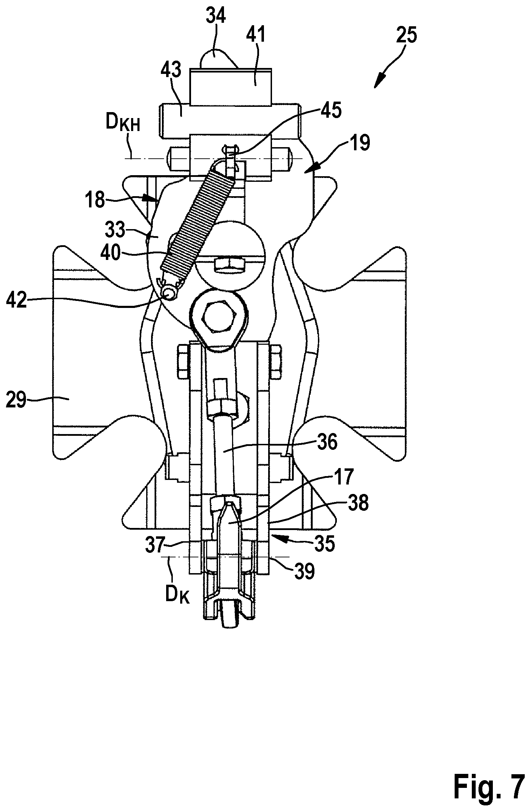

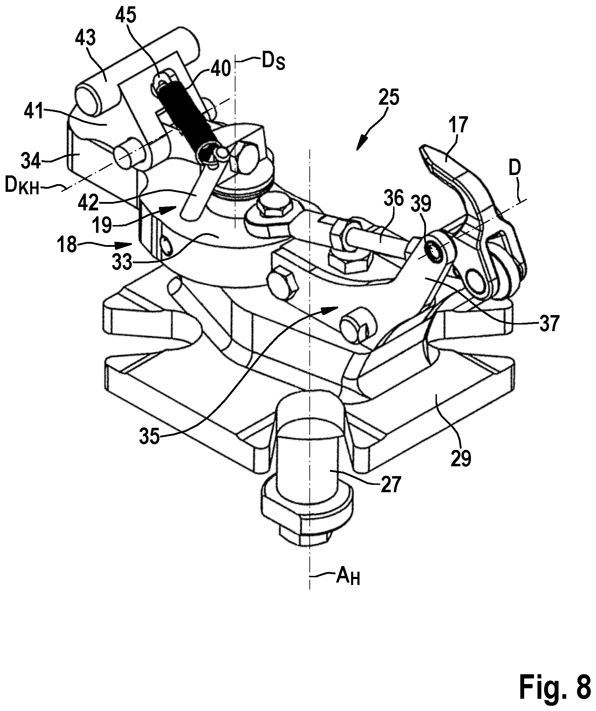

Der vorzugsweise flächig ausgebildete Stellhebel 19 spannt eine Ebene E_{S} auf, in der er auch schwenkbar ist. Der Stellhebel 19 umfasst erfindungsgemäß einen Exzenterplattenabschnitt 33 und einen Stellabschnitt 34. Die Drehachse D_{S} des Stellhebels 19 verläuft parallel und beabstandet, also exzentrisch zur Achse A_{H} der Welle 27, wobei der Stellhebel 19 relativ zum Drehelement 29 schwenkbar ist. Dabei verlaufen die Ebene E_{S} des Stellhebels 19 und die Ebene E_{D} des Drehelementes 29 im Wesentlichen parallel zueinander. Der Stellhebel 19 ist zum Schwenken des Klemmhakens 17 vorgesehen. Dazu ist der Klemmhaken 17 der Klemmeinrichtung 16 schwenkbar an einer Haltestruktur 35 gelagert, die ihrerseits mit dem Befestigungskörper 25 verbunden ist. Der Stellhebel 19 und der Klemmhaken 17 sind über eine Stellstange 36 miteinander verbunden, derart, dass die Stellstange 36 mit einem Ende gelenkig und exzentrisch an dem Exzenterplattenabschnitt 33 des Stellhebels 19 und mit dem entgegengesetzten Ende gelenkig mit dem Klemmhaken 17 verbunden ist, derart, dass der Stellhebel 19 zum Bewegen des Klemmhakens 17 aus einer Freigabestellung über einen Totpunkt hinweg in eine Schließstellung und zurück bewegbar ausgebildet und eingerichtet ist, wodurch der Klemmhaken 17 aus seiner Warteposition in seine Klemmposition bewegbar ist. Die oder jede Stellstange 36 oder jedes andere geeignete Kopplungselement ist vorzugsweise in ihrer Längserstreckung bezüglich der Länge variabel einstellbar ausgebildet. Im Ausführungsbeispiel (siehe insbesondere Figuren 5 bis 8) ist die Haltestruktur 35 z.B. durch zwei Tragarme 37, 38 gebildet, die lösbar am Befestigungskörper 25 angeordnet sind. Eine Achse 39 ist zwischen den beiden Tragarmen 37, 38 angeordnet und mit ihren entgegengesetzten Enden jeweils an einem Tragarm 37, 38 gelagert bzw. angeordnet. Auf der Achse 39 ist der Klemmhaken 17 drehbar bzw. schwenkbar gelagert angeordnet.

Bevorzugt ist der Stellhebel 19 federgespannt, wobei ein Federelement 40 zwischen dem Befestigungskörper 25 und dem Stellhebel 19 gespannt ist, derart, dass der Stellhebel 19 sowohl in der Freigabestellung als auch in der Schließstellung in der jeweiligen Stellung gehalten wird. Das Federelement 40 ist im dargestellten Beispiel zwischen einem bewegbaren Kipphebel 41 des Befestigungskörpers 25 einerseits und einem stiftartigen Körper 42, der ebenfalls exzentrisch zur Drehachse D_{S} auf dem Exzenterabschnitt 33 angeordnet ist, gespannt sein. Der stiftartige Körper 42 steht leicht geneigt zur senkrechten Ausrichtung, also geneigt zur Ebene E_{S} des Stellhebels 19, vorzugsweise um einen Winkel β von ca. 10° bis 30°. Der Kipphebel 41 ist schwenkbar um eine Drehachse D_{KH} am Befestigungskörper 25 angeordnet und ist gleichzeitig als Verschlusselement für den Stützkörper 26 auf dem bzw. an dem Befestigungskörper 25 ausgebildet und eingerichtet. Dazu weist der Kipphebel 41 entsprechende Rastnasen 43 auf, die in Eingriff zu korrespondierenden Ausnehmungen 44 am Stützkörper 26 bringbar sind. Das Federelement 40 kann direkt am Kipphebel 41 angeordnet sein. In anderen Varianten kann das Federelement 41 an einem Bolzen 45 oder dergleichen angeordnet sein, der an dem Kipphebel 41 vorzugsweise lösbar befestigt ist.

Die zuvor beschriebene Ausbildung der Haltevorrichtung 14 ist besonders gut geeignet, eine optimale Aufsattelung zu ermöglichen, indem die Haltevorrichtung 14 individuell in jede beliebige Position gedreht werden kann, insbesondere auch in eine Position, in der sie zum Aufstecken des Geflügelkörpers oder des Teils davon in einer im Wesentlichen vertikal zur Transportrichtung T ausgerichteten Position steht, und auch in eine Position, in der sie zum vollständigen Aufsatteln, also insbesondere zum Zentrieren und Fixieren, in einer im Wesentlichen parallel zur Transportrichtung T ausgerichteten Position steht. Vorzugsweise ist in Transportrichtung T hinter dem Betätigungshebel 24 zum Drehen der Haltevorrichtung 14 aus der im Wesentlichen vertikal zur Transportrichtung T ausgerichteten Position in die im Wesentlichen parallel zur Transportrichtung T ausgerichtete Position eine Aufsattelhilfsvorrichtung 46 angeordnet, die das Betätigungsorgan 20 zum Betätigen des Stellhebels 19 umfasst. Die Aufsattelhilfsvorrichtung 46 kann dem Obertrum 21 und/oder dem Untertrum 22 zugeordnet sein. Bevorzugt ist die Aufsattelhilfsvorrichtung 46 im Bereich des Obertrums 21 am Rahmengestell 11 angeordnet. Die Aufsattelvorrichtung 46 umfasst einen Tragrahmen 47, der am Rahmengestell 11 der Transportvorrichtung 10 befestigt ist.

Vorzugsweise sind zwei Führungsplatten 32 vorgesehen, wobei eine oberhalb und eine unterhalb des Transportmittels 13 angeordnet ist. Diese Führungsplatten 32 oder Führungsprofile erstrecken sich insbesondere im Bereich der Aufsattelung, also auch und insbesondere im Bereich der Aufsattelhilfsvorrichtung 46. An den Führungsplatten 32 sind vorzugsweise die Betätigungshebel 24 zum Drehen der Haltevorrichtung 14, nämlich z.B. unmittelbar vor der Aufsattelhilfsvorrichtung 46 zum Drehen aus einer vertikalen in eine horizontale Ausrichtung, und hinter der Aufsattelhilfsvorrichtung 46 zum Drehen aus der horizontalen in die vertikale Ausrichtung, angeordnet. Weitere Betätigungshebel 24, insbesondere auch im Bereich des Untertrums 22 vor und hinter Bearbeitungsstationen sind aber ebenfalls möglich.

Das Betätigungsorgan 20 als Bestandteil der Aufsattelhilfsvorrichtung 46 umfasst einen Schwenkhebel 48, der mittels eines Pneumatikzylinders 49 aus einer Warteposition in eine Betätigungsposition und zurück bewegbar ist, derart, dass der Stellhebel 19 des Betätigungsmechanismus 18 aus einer Freigabestellung über einen Totpunkt hinweg in eine Schließstellung bringbar ist. Der Pneumatikzylinder 49, der zusammen mit dem Schwenkhebel 48 am Tragrahmen 47 angeordnet ist, kann mechanisch ausgelöst werden. Bevorzugt ist der Pneumatikzylinder 49 aber über eine nicht explizit dargestellte Steuerungseinrichtung steuerbar, an die z.B. auch die Antriebe für das Transportmittel 13, mögliche Sensoren oder dergleichen angeschlossen sein können. Der Schwenkhebel 48 ist so angeordnet und ausgebildet, dass er beim Betätigen den Stellhebel 19 bis zum Totpunkt führt, derart, dass der Stellhebel 19 mit Überwindung des Totpunktes in die Schließstellung "springt". Der Stellhebel 19 wir durch den Schwenkhebel 48 über den Totpunkt hinaus bis in die Endlage betätigt.

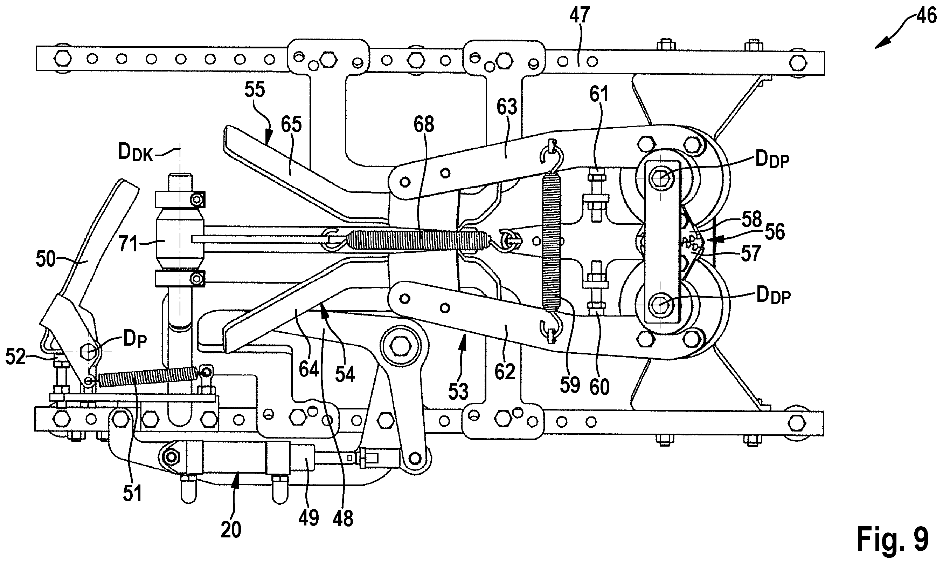

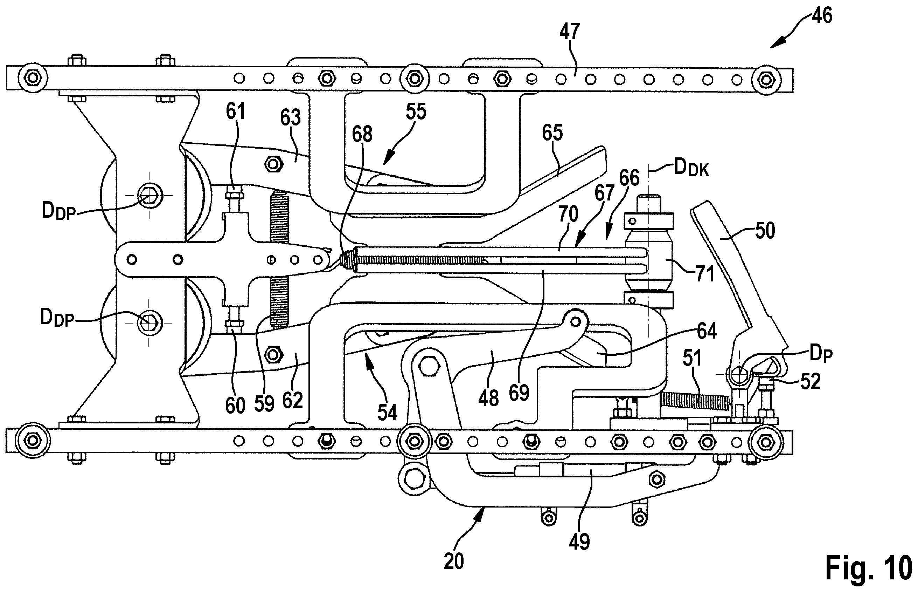

Die Aufsattelhilfsvorrichtung 46 umfasst mindestens eine Prallplatte 50, die in einer Ausgangsstellung in den Transportpfad hineinragt und federnd gelagert ist, derart, dass die Prallplatte 50 durch jede entlang des Transportpfads transportierte Haltevorrichtung 14 mit dem Geflügelkörper oder dem Teil davon gegen eine Federkraft in eine Führungsstellung bewegbar ist. Insbesondere den Figuren 9 und 10 ist zu entnehmen, dass die oder jede Prallplatte 50 um eine Drehachse D_{P} schwenkbar am Tragrahmen 47 gelagert ist. Die Prallplatte 50 kann ein einfaches Prallblech sein. In anderen Ausführungsformen sind auch andere Prallelemente einsetzbar. Die Prallplatte 50 ist in Transportrichtung T etwa in Höhe des Betätigungshebels 24 zum Drehen der Haltevorrichtung 14 angeordnet und ist in ihrer Ausgangsstellung mittels eines Federelementes 51 gegen einen Anschlag 52, der am Tragrahmen 47 ausgebildet ist, gehalten ist. Das Federelement 51 kann auch durch ein anderes Dämpfungselement, beispielsweise einen Pneumatikzylinder, ersetzt werden. Optional ist die Federkraft des Federelementes 51 oder jedes anderen Dämpfungselementes einstellbar.

Die Aufsattelhilfsvorrichtung 46 kann des Weiteren eine Andrückeinrichtung 53 umfassen, die zwei federnd gelagerte Druckplatten 54, 55 aufweist, die zum Führen und/oder Halten des Geflügelkörpers oder des Teils davon auf der Haltevorrichtung 14 ausgebildet und eingerichtet sind. Jede Druckplatte 54, 55 ist schwenkbar um eine Drehachse D_{DP} am Tragrahmen 47 gelagert. Die Schwenkbewegung erfolgt im Wesentlichen parallel zur Transportebene E_{O} des Obertrums 21. Anders ausgedrückt stehen die Drehachsen D_{DP} senkrecht oder im Wesentlichen senkrecht, also mit einer leichten Neigung von wenigen Grad, zur Transportebene E_{O}. Vorzugsweise sind die beiden Druckplatten 54, 55 miteinander in Wirkverbindung, nämlich bevorzugt über ein Synchrongetriebe 56, das aus zwei Zahnsegmenten 57, 58 gebildet ist, die ineinandergreifen. Damit sind die beiden Druckplatten 54, 55 hinsichtlich einer Beweglichkeit aufeinander zu und voneinander weg synchronisiert, wobei die beiden Druckplatten 54, 55 durch ein Federelement 59 jeweils gegen einen Anschlag 60, 61 in einer Warteposition gehalten sind. Die Synchronisation der beiden Druckplatten 54, 55 lässt sich auch auf andere Weise realisieren. Die Druckplatten 54, 55 sind beabstandet zueinander angeordnet, derart, dass die Haltevorrichtung 14 in ihrer Ausrichtung parallel zur Transportrichtung T zwischen den Druckplatten 54, 55 hindurch bewegbar ist. Mit anderen Worten ist eine Druckplatte 54 oberhalb und die andere Druckplatte 55 unterhalb der Haltevorrichtung 14 angeordnet, sofern sich die Haltevorrichtung 14 in der Aufsattelhilfsvorrichtung 46 befindet.

Das Federelement 59 ist zwischen den beiden Druckplatten 54, 55 gespannt und austauschbar, insbesondere auch zu Zwecken der Einstellung der Federkraft. In der bevorzugten und dargestellten Ausführungsform ist jede Druckplatte 54, 55 zweiteilig ausgebildet. Jede Druckplatte 54, 55 umfasst nämlich einen Stützabschnitt 62, 63 und einen Andrückabschnitt 64, 65. Stützabschnitt 62, 63 und Andrückabschnitt 64, 65 sind jeweils lösbar miteinander verbunden. Die Druckplatten 54, 55 können aber auch einteilig oder vielteilig ausgebildet sein. Die Druckplatten 54, 55 und insbesondere deren Andrückabschnitte 64, 65, die mit dem Geflügelkörper oder dem Teil davon in Kontakt kommen, verlaufen in Transportrichtung T in zwei Ebenen geneigt zueinander konvergierend. Andere Formgebungen und Ausgestaltungen der Druckplatten 54, 55 sind aber ebenfalls möglich.

Optional umfasst die Aufsattelhilfsvorrichtung 46 eine Zentriereinrichtung 66 zum Zentrieren des Geflügelkörpers oder Teils davon auf der Haltevorrichtung 14, die ein gabelförmiges Element 67 aufweist, das gegen die Federkraft eines Federelementes 68 ausweichbar an dem Tragrahmen 47 der Aufsattelhilfsvorrichtung 46 angeordnet ist. Das gabelförmige Element 67 weist zwei beabstandet zueinander angeordnete Streben 69, 70 auf, die zum Zentrieren eines Brustbeinkamms des zu transportierenden Geflügelkörpers oder Teils davon ausgebildet und eingerichtet sind. Die beiden Streben 69, 70 sind vorzugsweise Rundprofile, die einen Spalt bildend an einem Drehkörper 71 angeordnet sind, der drehbar am Tragrahmen 47 gelagert ist. Das Federelement 68 hält den Drehkörper 71 mit den Streben 69, 70 in einer Warteposition, in der die Haltevorrichtung 14 mit dem Geflügelkörper oder dem Teil davon zwingend auf die Streben 69, 70 trifft, die dann mit fortschreitendem Transport und sich steigernder Federkraft das Brustbein bzw. den Brustbeinkamm führen. Der Drehkörper 71 selbst ist um eine Drehachse D_{DK} drehbar, die im Wesentlichen senkrecht zur Transportrichtung T gerichtet ist.

Entlang des Transportpfads ist mindestens auch eine nicht explizit dargestellte Entriegelungseinrichtung vorgesehen, mittels der der Stellhebel 19 aus seiner Schließstellung in die Freigabestellung bewegbar ist, um den Klemmhaken 17 seinerseits aus der Klemmposition in die Warteposition zu schwenken.

Die Transportvorrichtung 10 bildet eine eigenständige Einheit. Bevorzugt ist die Transportvorrichtung 10 jedoch Bestandteil einer Vorrichtung 15 zur Verarbeitung von entweideten Geflügelkörpern oder Teilen davon, insbesondere von Vorderhälften der Geflügelkörper, umfassend eine Transportvorrichtung 10 zum Transportieren der Geflügelkörper oder Teilen davon entlang mindestens einer Bearbeitungsstation zum Bearbeiten der Geflügelkörper oder Teilen davon, sowie mindestens eine Bearbeitungsstation zum Bearbeiten der Geflügelkörper oder Teilen davon. Diese Vorrichtung 15 zeichnet sich erfindungsgemäß dadurch aus, dass die Transportvorrichtung 10 zum Transportieren der Geflügelkörper oder Teilen davon nach einem oder mehreren der Ansprüche 1 bis 12 ausgebildet und eingerichtet ist.

Die oder jede Bearbeitungsstation ist vorzugsweise im Bereich des Untertrums 22 angeordnet, so dass der Geflügelkörper oder das Teil davon über Kopf transportiert wird, was insbesondere die Gewinnung von Brustfilets von Vorderhälften der Geflügelkörper vereinfacht.

Im Folgenden wird das Verfahren anhand der Zeichnung näher erläutert. Das Verfahren dient zum Aufsatteln und Verarbeiten eines entweideten Geflügelkörpers oder eines Teils davon, insbesondere einer Vorderhälfte des Geflügelkörpers. Dieses Verfahren ist erfindungsgemäß durch die folgenden Schritte gekennzeichnet: Zunächst wird der Geflügelkörper oder das Teil davon von oben nach unten auf eine im Wesentlichen vertikal ausgerichtete Haltevorrichtung 14 einer Transportvorrichtung 10 gesetzt. Das Aufsetzen erfolgt im Wesentlichen ohne Kraft und ohne Ausrichten und Zentrieren des Geflügelkörpers oder des Teils davon. Das Aufsetzen kann manuell oder automatisiert z.B. mittels eines Roboters erfolgen. Nach dem Aufsetzen wird die Haltevorrichtung 14 und damit der noch freie Geflügelkörper oder das Teil davon aus der im Wesentlichen vertikal zur Transportrichtung T ausgerichteten Position in eine im Wesentlichen parallel zur Transportrichtung T ausgerichtete Position während des Transports des Geflügelkörpers oder Teils davon in Transportrichtung T entlang eines Transportpfads gedreht. Das Drehen erfolgt automatisiert. Nach dem Drehen wird der Geflügelkörper oder das Teil davon auf der Haltevorrichtung 14 durch Auslösen einer Schwenkbewegung eines Klemmhakens 17 aus einer Warteposition in eine Klemmposition während des Transports in Transportrichtung T fixiert. Auch das Fixieren erfolgt automatisiert. Nach dem Fixieren wird der Geflügelkörper oder das Teil davon während des Transports desselben an mindestens einer entlang des Transportpfads angeordneten Bearbeitungsstation verarbeitet. Die Verarbeitung kann in der horizontal und parallel zur Transportrichtung T ausgerichteten Position oder in der vertikal zur Transportrichtung T ausgerichteten Position erfolgen. Nach dem Drehen der Haltevorrichtung 14 und vor und während des Fixierens wird der Geflügelkörper oder das Teil davon auf der Haltevorrichtung 14 zentriert. Das erfindungsgemäße Verfahren kann somit halbautomatisch oder vollautomatisch ausgeführt werden. Erfindungsgemäß wird der Geflügelkörper oder das Teil davon vor dem Fixieren und während des Fixierens mittels einer Zentriereinrichtung 66 einer Aufsattelvorrichtung 46 im Bereich eines Brustbeinkamms des Geflügelkörpers oder des Teils davon mittig zur Haltevorrichtung 14 zentriert.

Vorzugsweise wird der Geflügelkörper oder das Teil davon während des Drehens der Haltevorrichtung und damit des Geflügelkörpers oder Teils davon aus der vertikalen in die horizontale Ausrichtung mittels mindestens einer Prallplatte einer Aufsattelhilfsvorrichtung gehalten und geführt. Beim Transport in Transportrichtung T wird der Geflügelkörper oder das Teil davon während des Drehens in die horizontale Ausrichtung durch die sich in die Führungsposition ausweichende Prallplatte gestützt und gehalten.

Zum vollständigen Aufsatteln wird der Geflügelkörper oder das Teil davon vor dem Fixieren und während des Fixierens mittels einer Andrückeinrichtung 53 einer Aufsattelhilfsvorrichtung 46 fest und flach auf die Haltevorrichtung 14 gedrückt. Der Geflügelkörper oder das Teil davon wird durch den Transport in Transportrichtung T gegen die Andrückeinrichtung 53 fest und vollständig auf die Haltevorrichtung 14 gedrückt und darauf gehalten. Die Haltevorrichtung 14 mit dem Geflügelkörper oder dem Teil davon wird dazu zwischen Druckplatten 54, 55 der Andrückeinrichtung 53 bewegt, die durch den Geflügelkörper oder das Teil davon gegen eine Federkraft ausgelenkt werden. Beim Transport in Transportrichtung T fädelt der Brustbeinkamm zwischen zwei federnd gelagerten Streben 70, 71 ein. Dadurch wird der Geflügelkörper oder das Teil davon symmetrisch auf der Haltevorrichtung 14 ausgerichtet und positioniert, bevor und während der Klemmhaken 17 mittels eines Schwenkhebels 48, der von einem Pneumatikzylinder 49 betätigt wird, in seine Klemmposition geschwenkt wird.

## Patentansprüche

1. Transportvorrichtung (10), ausgebildet und eingerichtet zum Transportieren von entweideten Geflügelkörpern oder Teilen davon, insbesondere von Vorderhälften der Geflügelkörper, in Transportrichtung T entlang eines Transportpfads, umfassend ein Rahmengestell (11), eine am Rahmengestell (11) gelagerte Transporteinheit (12) mit einem umlaufend angetriebenen Transportmittel (13), und mindestens eine am Transportmittel (13) befestigte Haltevorrichtung (14), die zum Aufsatteln und Halten des Geflügelkörpers oder des Teils davon während des Transports und während der Verarbeitung in einer Vorrichtung (15) zur Verarbeitung von Geflügelkörpern oder Teilen davon ausgebildet und eingerichtet ist, wobei die Haltevorrichtung (14) eine Klemmeinrichtung (16) umfasst, die zum Fixieren des Geflügelkörpers oder des Teils davon einen Klemmhaken (17) aufweist, der mittels eines Betätigungsmechanismus (18) um eine Drehachse D_{K} aus einer Warteposition in eine Klemmposition und zurück schwenkbar ausgebildet ist, wobei der Betätigungsmechanismus (18) einen Stellhebel (19) umfasst, der um eine Drehachse D_{S} schwenkbar ausgebildet ist und mit einem Betätigungsorgan (20), das am Rahmengestell (11) entlang des Transportpfads angeordnet ist, zum Schwenken des Stellhebels (19) und damit zum Schwenken des Klemmhakens (17) in Wirkverbindung bringbar ist, wobei die Haltevorrichtung (14) mindestens zum vollständigen Aufsatteln des Geflügelkörpers oder Teils davon um eine Achse A_{H}, die senkrecht zur Transportrichtung T verläuft, relativ zum Transportmittel (13) drehbar ausgebildet und eingerichtet ist und dazu mit einem Betätigungshebel (24), der am Rahmengestell (11) entlang des Transportpfads angeordnet ist, in Wirkverbindung bringbar ist, und dass die Drehachse D_{S} des Stellhebels (19) senkrecht zur Drehachse D_{K} des Klemmhakens (17) ausgerichtet ist, wobei der Betätigungshebel (24) zum Drehen der Haltevorrichtung (14) in Transportrichtung T vor dem Betätigungsorgan (20) zum Betätigen des Stellhebels (19) angeordnet ist, wobei die Haltevorrichtung (14) einen Befestigungskörper (25) und einen lösbar am Befestigungskörper (25) befestigten Stützkörper (26) umfasst, wobei der Befestigungskörper (25) mittels einer Welle (27) in einer am Transportmittel (13) befestigten Lagerplatte (28) drehbar um die Drehachse A_{H} gelagert ist und ein eine Ebene E_{D} aufspannendes Drehelement (29), vorzugsweise ein Drehkreuz, umfasst, das zum Drehen des Befestigungskörpers (25) und damit der Haltevorrichtung (14) um die Achse A_{H} mit dem Betätigungshebel (24) in Wirkverbindung bringbar ist, wobei der eine Ebene E_{S} aufspannende Stellhebel (19) einen Exzenterplattenabschnitt (33) und einen Stellabschnitt (34) umfasst und die Drehachse D_{S} des Stellhebels (19) parallel und beabstandet zur Achse A_{H} verläuft, wobei der Stellhebel (19) relativ zum Drehelement (29) schwenkbar ist und die Ebene E_{S} und die Ebene E_{D} im Wesentlichen parallel zueinander verlaufen.

2. Transportvorrichtung (10) nach Anspruch 1, wobei der Klemmhaken (17) der Klemmeinrichtung (16) schwenkbar an einer Haltestruktur (35) gelagert ist, die ihrerseits mit dem Befestigungskörper (25) verbunden ist, und der Stellhebel (19) und der Klemmhaken (17) über eine Stellstange (36) miteinander verbunden sind, derart, dass die Stellstange (36) mit einem Ende gelenkig und exzentrisch an dem Exzenterplattenabschnitt (33) des Stellhebels (19) und mit dem entgegengesetzten Ende gelenkig mit dem Klemmhaken (17) verbunden ist, derart, dass der Stellhebel (19) zum Bewegen des Klemmhakens (17) aus einer Freigabestellung über einen Totpunkt hinweg in eine Schließstellung und zurück bewegbar ausgebildet und eingerichtet ist.

3. Transportvorrichtung (10) nach Anspruch 2, wobei der Stellhebel (19) federgespannt ist, wobei ein Federelement (40) zwischen dem Befestigungskörper (25) und dem Stellhebel (19) gespannt ist, derart, dass der Stellhebel (19) sowohl in der Freigabestellung als auch in der Schließstellung in der jeweiligen Stellung gehalten wird.

4. Transportvorrichtung (10) nach einem oder mehreren der Ansprüche 1 bis 3, wobei in Transportrichtung T hinter dem Betätigungshebel (24) zum Drehen der Haltevorrichtung (14) aus einer im Wesentlichen vertikal zur Transportrichtung T ausgerichteten Position in eine im Wesentlichen parallel zur Transportrichtung T ausgerichtete Position eine Aufsattelhilfsvorrichtung (46) angeordnet ist, die das Betätigungsorgan (20) zum Betätigen des Stellhebels (19) umfasst.

5. Transportvorrichtung (10) nach Anspruch 4, wobei das Betätigungsorgan (20) einen Schwenkhebel (48) umfasst, der mittels eines Pneumatikzylinders (49) aus einer Warteposition in eine Betätigungsposition und zurück bewegbar ist, derart, dass der Stellhebel (19) des Betätigungsmechanismus (18) aus einer Freigabestellung über einen Totpunkt hinweg in eine Schließstellung bringbar ist.

6. Transportvorrichtung (10) nach Anspruch 4 oder 5, wobei die Aufsattelhilfsvorrichtung (46) mindestens eine Prallplatte (50) umfasst, die in einer Ausgangsstellung in den Transportpfad hineinragt und federnd gelagert ist, derart, dass die Prallplatte (50) durch jede entlang des Transportpfads transportierte Haltevorrichtung (14) mit dem Geflügelkörper oder Teil davon gegen eine Federkraft in eine Führungsstellung bewegbar ist.

7. Transportvorrichtung (10) nach Anspruch 6, wobei die Prallplatte (50) in Transportrichtung T etwa in Höhe des Betätigungshebels (24) zum Drehen der Haltevorrichtung (14) angeordnet ist und in ihrer Ausgangsstellung mittels eines Federelementes (51) gegen einen Anschlag (52) gehalten ist.

8. Transportvorrichtung (10) nach einem oder mehreren der Ansprüche 4 bis 7, wobei die Aufsattelhilfsvorrichtung (46) eine Andrückeinrichtung (53) umfasst, die zwei federnd gelagerte Druckplatten (54, 55) aufweist, die zum Führen und/oder Halten des Geflügelkörpers oder des Teils davon auf der Haltevorrichtung (14) ausgebildet und eingerichtet sind.

9. Transportvorrichtung (10) nach Anspruch 8, wobei die beiden Druckplatten (54, 55) über ein Synchrongetriebe (56) hinsichtlich einer Beweglichkeit aufeinander zu und voneinander weg synchronisiert sind, wobei die beiden Druckplatten (54, 55) durch ein Federelement (59) jeweils gegen einen Anschlag (60, 61) in einer Warteposition gehalten sind.

10. Transportvorrichtung (10) nach Anspruch 8 oder 9, wobei die Druckplatten (54, 55) in Transportrichtung T in zwei Ebenen geneigt zueinander konvergierend verlaufen.

11. Transportvorrichtung (10) nach einem oder mehreren der Ansprüche 4 bis 10, wobei die Aufsattelhilfsvorrichtung (46) eine Zentriereinrichtung (66) zum Zentrieren des Geflügelkörpers oder Teils davon auf der Haltevorrichtung (14) umfasst, die ein gabelförmiges Element (67) aufweist, das gegen die Federkraft eines Federelementes (68) ausweichbar an einem Tragrahmen (47) der Aufsattelhilfsvorrichtung (46) angeordnet ist.

12. Transportvorrichtung (10) nach Anspruch 11, wobei das gabelförmige Element (67) zwei beabstandet zueinander angeordnete Streben (69, 70) aufweist, die zum Zentrieren eines Brustbeinkamms des zu transportierenden Geflügelkörpers oder Teils davon ausgebildet und eingerichtet sind.

13. Vorrichtung (15) zur Verarbeitung von entweideten Geflügelkörpern oder Teilen davon, insbesondere von Vorderhälften der Geflügelkörper, umfassend eine Transportvorrichtung (10) zum Transportieren der Geflügelkörper oder Teilen davon entlang mindestens einer Bearbeitungsstation zum Bearbeiten der Geflügelkörper oder Teilen davon, sowie mindestens eine Bearbeitungsstation zum Bearbeiten der Geflügelkörper oder Teilen davon, wobei die Transportvorrichtung (10) zum Transportieren der Geflügelkörper oder Teilen davon nach einem oder mehreren der Ansprüche 1 bis 12 ausgebildet und eingerichtet ist.

14. Verfahren zum Aufsatteln und Verarbeiten eines entweideten Geflügelkörpers oder eines Teils davon, insbesondere einer Vorderhälfte des Geflügelkörpers, umfassend die Schritte:
- Aufsetzen des Geflügelkörpers von oben nach unten auf eine im Wesentlichen vertikal ausgerichtete Haltevorrichtung (14) einer Transportvorrichtung (10) nach Anspruch 4,
- Drehen der Haltevorrichtung (14) und damit des noch freien Geflügelkörpers oder Teils davon aus der im Wesentlichen vertikal zur Transportrichtung T ausgerichteten Position in eine im Wesentlichen parallel zur Transportrichtung T ausgerichtete Position während des Transports des Geflügelkörpers oder Teils davon in Transportrichtung T entlang des Transportpfads,
- Fixieren des Geflügelkörpers oder des Teils davon auf der Haltevorrichtung (14) durch Auslösen einer Schwenkbewegung eines Klemmhakens (17) aus einer Warteposition in eine Klemmposition während des Transports in Transportrichtung T, und
- Verarbeiten des Geflügelkörpers oder Teils davon während des Transports desselben an mindestens einer entlang des Transportpfads angeordneten Bearbeitungsstation, wobei der Geflügelkörper oder das Teil davon vor dem Fixieren und während des Fixierens mittels einer Zentriereinrichtung (66) der Aufsattelvorrichtung (46) im Bereich eines Brustbeinkamms des Geflügelkörpers oder des Teils davon mittig zur Haltevorrichtung (14) zentriert wird.

15. Verfahren nach Anspruch 14, wobei der Geflügelkörper oder das Teil davon während des Drehens der Haltevorrichtung (14) und damit des Geflügelkörpers oder Teils davon aus der vertikalen in die horizontale Ausrichtung mittels mindestens einer Prallplatte (50) der Aufsattelhilfsvorrichtung (46) gehalten und geführt wird.

16. Verfahren nach Anspruch 14 oder 15, wobei der Geflügelkörper oder das Teil davon vor dem Fixieren und während des Fixierens mittels einer Andrückeinrichtung (53) der Aufsattelhilfsvorrichtung (46) fest und flach auf die Haltevorrichtung (14) gedrückt wird.

## Claims

1. Transport apparatus (10), configured and adapted for transporting eviscerated poultry bodies or parts thereof, in particular front halves of the poultry bodies, in a transport direction T along a transport path, comprising a frame (11), a transport unit (12) mounted on the frame (11) and having a revolvingly driven transport means (13), and at least one holding apparatus (14) which is fastened to the transport means (13) and is configured and adapted for saddling and holding the poultry body or the part thereof during transport and during processing in an apparatus (15) for processing poultry bodies or parts thereof, wherein the holding apparatus (14) comprises a clamping device (16) which has a clamping hook (17) for fixing the poultry body or the part thereof, which clamping hook is configured to be pivotable by means of an actuating mechanism (18) about a rotational axis D_{K} from a standby position into a clamping position and back, wherein the actuating mechanism (18) comprises an adjusting lever (19) which is configured to be pivotable about a rotational axis D_{S} and can be brought into operative connection with an actuating member (20), which is arranged on the frame (11) along the transport path, for pivoting the adjusting lever (19) and thus for pivoting the clamping hook (17), wherein the holding apparatus (14), at least for the complete saddling of the poultry body or of the part thereof, is configured and adapted to be rotatable relative to the transport means (13) about an axis A_{H} which runs perpendicular to the transport direction T, and to that end can be brought into operative connection with an actuating lever (24) which is arranged on the frame (11) along the transport path, and in that the rotational axis D_{S} of the adjusting lever (19) is oriented perpendicular to the rotational axis D_{K} of the clamping hook (17), wherein the actuating lever (24) for rotating the holding apparatus (14) is arranged before, in the transport direction T, the actuating member (20) for actuating the adjusting lever (19), wherein the holding apparatus (14) comprises a fastening body (25) and a supporting body (26) which is releasably fastened to the fastening body (25), wherein the fastening body (25) is rotatably mounted about the rotational axis A_{H} by means of a shaft (27) in a bearing plate (28) fastened to the transport means (13) and comprises a rotating element (29), preferably a rotating cross, which spans a plane E_{D} and, for rotation of the fastening body (25) and thus of the holding apparatus (14) about the axis A_{H}, can be brought into operative connection with the actuating lever (24), wherein the adjusting lever (19) spanning a plane E_{S} comprises an eccentric plate portion (33) and an adjusting portion (34), and the rotational axis D_{S} of the adjusting lever (19) runs parallel to and spaced apart from the axis A_{H}, wherein the adjusting lever (19) is pivotable relative to the rotating element (29) and the plane E_{S} and the plane E_{D} run substantially parallel to one another.

2. Transport apparatus (10) according to claim 1, wherein the clamping hook (17) of the clamping device (16) is pivotably mounted on a holding structure (35), which in turn is connected to the fastening body (25), and the adjusting lever (19) and the clamping hook (17) are connected together by way of an adjusting rod (36), such that the adjusting rod (36) is connected at one end in an articulated and eccentric manner to the eccentric plate portion (33) of the adjusting lever (19) and is connected at the opposite end in an articulated manner to the clamping hook (17), such that the adjusting lever (19) for moving the clamping hook (17) is configured and adapted to be movable from a release position past a dead centre into a closed position and back.

3. Transport apparatus (10) according to claim 2, wherein the adjusting lever (19) is spring-biased, wherein a spring element (40) is tensioned between the fastening body (25) and the adjusting lever (19), such that, both in the release position and in the closed position, the adjusting lever (19) is held in the respective position.

4. Transport apparatus (10) according to one or more of claims 1 to 3, wherein a saddling assist apparatus (46) is arranged after, in the transport direction T, the actuating lever (24) for rotating the holding apparatus (14) from a position oriented substantially vertical to the transport direction T into a position oriented substantially parallel to the transport direction T, which saddling assist apparatus comprises the actuating member (20) for actuating the adjusting lever (19).

5. Transport apparatus (10) according to claim 4, wherein the actuating member (20) comprises a pivot lever (48) which is movable by means of a pneumatic cylinder (49) from a standby position into an actuating position and back, such that the adjusting lever (19) of the actuating mechanism (18) can be brought from a release position past a dead centre into a closed position.

6. Transport apparatus (10) according to claim 4 or 5, wherein the saddling assist apparatus (46) comprises at least one impact plate (50) which projects into the transport path in a starting position and is spring-mounted, such that the impact plate (50) is movable against a spring force into a guiding position by any holding apparatus (14) having the poultry body or part thereof that is transported along the transport path.

7. Transport apparatus (10) according to claim 6, wherein the impact plate (50) is arranged in the transport direction T approximately at the height of the actuating lever (24) for rotating the holding apparatus (14) and is held against an abutment (52) in its starting position by means of a spring element (51).

8. Transport apparatus (10) according to one or more of claims 4 to 7, wherein the saddling assist apparatus (46) comprises a pressing device (53) which has two spring-mounted pressure plates (54, 55) which are configured and adapted for guiding and/or holding the poultry body or the part thereof on the holding apparatus (14).

9. Transport apparatus (10) according to claim 8, wherein the two pressure plates (54, 55) are synchronised in respect of movability towards one another and away from one another by way of a synchronous gear (56), wherein the two pressure plates (54, 55) are each held against an abutment (60, 61) in a standby position by a spring element (59).

10. Transport apparatus (10) according to claim 8 or 9, wherein the pressure plates (54, 55) run in the transport direction T in two planes in such a manner that they are inclined relative to one another and converge.

11. Transport apparatus (10) according to one or more of claims 4 to 10, wherein the saddling assist apparatus (46) comprises a centring device (66) for centring the poultry body or part thereof on the holding apparatus (14), which centring device (66) has a forked element (67) which is arranged on a carrying frame (47) of the saddling assist apparatus (46) in such a manner that it can be deflected against the spring force of a spring element (68).

12. Transport apparatus (10) according to claim 11, wherein the forked element (67) has two bars (69, 70) which are arranged spaced apart from one another and are configured and adapted for centring a breastbone crest of the poultry body or part thereof to be transported.

13. Apparatus (15) for processing eviscerated poultry bodies or parts thereof, in particular front halves of the poultry bodies, comprising a transport apparatus (10) for transporting the poultry bodies or parts thereof along at least one processing station for processing the poultry bodies or parts thereof, and at least one processing station for processing the poultry bodies or parts thereof, wherein the transport apparatus (10) for transporting the poultry bodies or parts thereof is configured and adapted according to one or more of claims 1 to 12.

14. Method for saddling and processing an eviscerated poultry body or a part thereof, in particular a front half of the poultry body, comprising the following steps:
- placing the poultry body from the top down onto a substantially vertically oriented holding apparatus (14) of a transport apparatus (10) according to claim 4,
- rotating the holding apparatus (14) and thus the poultry body or part thereof, which is still free, from the position oriented substantially vertical to the transport direction T into a position oriented substantially parallel to the transport direction T during transport of the poultry body or part thereof in the transport direction T along the transport path,
- fixing the poultry body or the part thereof on the holding apparatus (14) by triggering a pivot movement of a clamping hook (17) from a standby position into a clamping position during transport in the transport direction T, and
- processing the poultry body or part thereof during transport thereof at at least one processing station arranged along the transport path, wherein, before fixing and during fixing, the poultry body or the part thereof is centred centrally relative to the holding apparatus (14) in the region of a breastbone crest of the poultry body or of the part thereof by means of a centring device (66) of the saddling apparatus (46).

15. Method according to claim 14, wherein, during the rotation of the holding apparatus (14) and thus of the poultry body or part thereof from the vertical orientation into the horizontal orientation, the poultry body or the part thereof is held and guided by means of at least one impact plate (50) of the saddling assist apparatus (46).

16. Method according to claim 14 or 15, wherein the poultry body or the part thereof, before fixing and during fixing, is pressed firmly and flatly onto the holding apparatus (14) by means of a pressing device (53) of the saddling assist apparatus (46).

## Revendications

1. Dispositif de transport (10), configuré et adapté pour transporter des carcasses de volaille éviscérées ou des parties de celles-ci, notamment des moitiés avant de carcasses de volaille, dans la direction de transport T le long d'un trajet de transport, comprenant un châssis (11), une unité de transport (12) montée sur le châssis (11) avec un moyen de transport (13) entraîné de manière circulaire, et au moins un dispositif de maintien (14) fixé au moyen de transport (13), qui est configuré et adapté pour mettre en place et maintenir la carcasse de volaille ou la partie de celle-ci pendant le transport et pendant le traitement dans un dispositif (15) pour le traitement de carcasses de volaille ou de parties de celles-ci, où le dispositif de maintien (14) comprend un appareil de serrage (16) qui, pour immobiliser la carcasse de volaille ou la partie de celle-ci, présente un crochet de serrage (17) qui, au moyen d'un mécanisme d'actionnement (18), est configuré pour pouvoir pivoter autour d'un axe de rotation D_{K} d'une position d'attente à une position de serrage et inversement, où le mécanisme d'actionnement (18) comprend un levier de réglage (19) qui est configuré pour pouvoir pivoter autour d'un axe de rotation D_{S} et qui peut être mis en liaison active avec un organe d'actionnement (20) agencé sur le châssis (11) le long du trajet de transport afin de faire pivoter le levier de réglage (19) et ainsi faire pivoter le crochet de serrage (17), où le dispositif de maintien (14) est configuré et adapté pour pouvoir tourner par rapport au moyen de transport (13) autour d'un axe A_{H} perpendiculaire à la direction de transport T au moins pour mettre complètement en place la carcasse de volaille ou partie de celle-ci, et peut à cet effet être mis en liaison active avec un levier d'actionnement (24) agencé sur le châssis (11) le long du trajet de transport, et que l'axe de rotation D_{S} du levier de réglage (19) est orienté perpendiculairement à l'axe de rotation D_{K} du crochet de serrage (17), où le levier d'actionnement (24) pour faire tourner le dispositif de maintien (14) est agencé dans la direction de transport T devant l'organe d'actionnement (20) pour actionner le levier de réglage (19), où le dispositif de maintien (14) comprend un corps de fixation (25) et un corps de support (26) fixé de manière amovible au corps de fixation (25), où le corps de fixation (25) est monté au moyen d'un arbre (27) dans une plaque de palier (28) fixée au moyen de transport (13) de manière à pouvoir tourner autour de l'axe de rotation A_{H} et comprend un élément rotatif (29) définissant un plan E_{D}, de préférence une croix tournante, qui peut être mis en liaison active avec le levier d'actionnement (24) pour faire tourner le corps de fixation (25) et ainsi le dispositif de maintien (14) autour de l'axe A_{H}, où le levier de réglage (19) définissant un plan E_{S} comprend une section de plaque excentrique (33) et une section de réglage (34), et l'axe de rotation D_{S} du levier de réglage (19) s'étend parallèlement et à distance de l'axe A_{H}, où le levier de réglage (19) peut pivoter par rapport à l'élément rotatif (29) et le plan E_{S} et le plan E_{D} s'étendent essentiellement parallèlement l'un à l'autre.

2. Dispositif de transport (10) selon la revendication 1, où le crochet de serrage (17) de l'appareil de serrage (16) est monté de manière pivotante sur une structure de maintien (35) qui est elle-même reliée au corps de fixation (25), et le levier de réglage (19) et le crochet de serrage (17) sont reliés entre eux par l'intermédiaire d'une tige de réglage (36), de telle sorte que la tige de réglage (36) est reliée par une extrémité de manière articulée et excentrique à la section de plaque excentrique (33) du levier de réglage (19) et par l'extrémité opposée de manière articulée au crochet de serrage (17), de telle sorte que le levier de réglage (19) est configuré et adapté pour déplacer le crochet de serrage (17) d'une position de libération, au-delà d'un point mort, à une position de fermeture et inversement.

3. Dispositif de transport (10) selon la revendication 2, où le levier de réglage (19) est tendu par ressort, où un élément à ressort (40) est tendu entre le corps de fixation (25) et le levier de réglage (19) de telle sorte que le levier de réglage (19) est maintenu dans la position respective aussi bien dans la position de libération que dans la position de fermeture.

4. Dispositif de transport (10) selon une ou plusieurs des revendications 1 à 3, où un dispositif auxiliaire de mise en place (46), qui comprend l'organe d'actionnement (20) pour actionner le levier de réglage (19), est agencé dans la direction de transport T derrière le levier d'actionnement (24) pour faire tourner le dispositif de maintien (14) d'une position orientée essentiellement verticalement par rapport à la direction de transport T à une position orientée essentiellement parallèlement à la direction de transport T.

5. Dispositif de transport (10) selon la revendication 4, où l'organe d'actionnement (20) comprend un levier pivotant (48) qui peut être déplacé au moyen d'un vérin pneumatique (49) d'une position d'attente à une position d'actionnement et inversement, de telle sorte que le levier de réglage (19) du mécanisme d'actionnement (18) peut être amené d'une position de libération, au-delà d'un point mort, à une position de fermeture.

6. Dispositif de transport (10) selon la revendication 4 ou 5, où le dispositif auxiliaire de mise en place (46) comprend au moins une plaque d'impact (50) qui, dans une position initiale, fait saillie dans le trajet de transport et est montée à ressort, de telle sorte que la plaque d'impact (50) peut être déplacée par chaque dispositif de maintien (14) transporté le long du trajet de transport avec la carcasse de volaille ou partie de celle-ci contre une force de ressort dans une position de guidage.

7. Dispositif de transport (10) selon la revendication 6, où la plaque d'impact (50) est agencée dans la direction de transport T à peu près à la hauteur du levier d'actionnement (24) pour faire tourner le dispositif de maintien (14) et est maintenue dans sa position initiale contre une butée (52) au moyen d'un élément à ressort (51).

8. Dispositif de transport (10) selon une ou plusieurs des revendications 4 à 7, où le dispositif auxiliaire de mise en place (46) comprend un appareil de pression (53) qui présente deux plaques de pression montées à ressort (54, 55) qui sont configurées et adaptées pour guider et/ou maintenir la carcasse de volaille ou la partie de celle-ci sur le dispositif de maintien (14).

9. Dispositif de transport (10) selon la revendication 8, où les deux plaques de pression (54, 55) sont synchronisées par l'intermédiaire d'un engrenage synchrone (56) en ce qui concerne une mobilité l'une vers l'autre et l'une à l'écart de l'autre, où les deux plaques de pression (54, 55) sont maintenues par un élément à ressort (59) respectivement contre une butée (60, 61) dans une position d'attente.

10. Dispositif de transport (10) selon la revendication 8 ou 9, où les plaques de pression (54, 55) s'étendent dans la direction de transport T dans deux plans inclinés convergeant l'un vers l'autre.

11. Dispositif de transport (10) selon une ou plusieurs des revendications 4 à 10, où le dispositif auxiliaire de mise en place (46) comprend un appareil de centrage (66) pour centrer la carcasse de volaille ou partie de celle-ci sur le dispositif de maintien (14), qui présente un élément en forme de fourche (67) qui est agencé sur un cadre porteur (47) du dispositif auxiliaire de mise en place (46) de manière à pouvoir s'écarter contre la force de ressort d'un élément à ressort (68).

12. Dispositif de transport (10) selon la revendication 11, où l'élément en forme de fourche (67) présente deux entretoises (69, 70) agencées à distance l'une de l'autre, qui sont configurées et adaptées pour centrer une crête sternale de la carcasse de volaille ou partie de celle-ci à transporter.

13. Dispositif (15) pour le traitement de carcasses de volaille éviscérées ou de parties de celles-ci, notamment de moitiés avant de carcasses de volaille, comprenant un dispositif de transport (10) pour transporter les carcasses de volaille ou parties de celles-ci le long d'au moins une station de traitement pour traiter les carcasses de volaille ou parties de celles-ci, ainsi qu'au moins une station de traitement pour traiter les carcasses de volaille ou parties de celles-ci, où le dispositif de transport (10) pour transporter les carcasses de volaille ou parties de celles-ci est configuré et adapté selon une ou plusieurs des revendications 1 à 12.

14. Procédé pour mettre en place et traiter une carcasse de volaille éviscérée ou une partie de celle-ci, notamment une moitié avant de la carcasse de volaille, comprenant les étapes :
- la pose de la carcasse de volaille de haut en bas sur un dispositif de maintien (14) orienté essentiellement verticalement d'un dispositif de transport (10) selon la revendication 4,
- la rotation du dispositif de maintien (14) et ainsi de la carcasse de volaille ou partie de celle-ci encore libre d'une position orientée essentiellement verticalement par rapport à la direction de transport T à une position orientée essentiellement parallèlement à la direction de transport T pendant le transport de la carcasse de volaille ou partie de celle-ci dans la direction de transport T le long du trajet de transport,
- l'immobilisation de la carcasse de volaille ou de la partie de celle-ci sur le dispositif de maintien (14) par déclenchement d'un mouvement de pivotement d'un crochet de serrage (17) d'une position d'attente à une position de serrage pendant le transport dans la direction de transport T, et
- le traitement de la carcasse de volaille ou partie de celle-ci pendant son transport au niveau d'au moins une station de traitement agencée le long du trajet de transport, où la carcasse de volaille ou la partie de celle-ci est centrée avant l'immobilisation et pendant l'immobilisation au moyen d'un appareil de centrage (66) du dispositif de mise en place (46) dans la zone d'une crête sternale de la carcasse de volaille ou de la partie de celle-ci, au centre du dispositif de maintien (14).

15. Procédé selon la revendication 14, où la carcasse de volaille ou la partie de celle-ci est maintenue et guidée pendant la rotation du dispositif de maintien (14) et ainsi de la carcasse de volaille ou partie de celle-ci de l'orientation verticale à l'orientation horizontale au moyen d'au moins une plaque d'impact (50) du dispositif auxiliaire de mise en place (46).

16. Procédé selon la revendication 14 ou 15, où la carcasse de volaille ou la partie de celle-ci est pressée fermement et à plat sur le dispositif de maintien (14) au moyen d'un appareil de pression (53) du dispositif auxiliaire de mise en place (46) avant l'immobilisation et pendant l'immobilisation.
